# EUROPEAN PATENT APPLICATION

(11) **EP 4 293 950 A1**
(43) Date of publication of application: **20.12.2023**
(21) Application number: 22752664.7
(22) Date of filing: 03.02.2022
(51) Int. Cl.: H04L 5/14

(54) **COMMUNICATION DEVICE, COMMUNICATION SYSTEM, AND COMMUNICATION METHOD**

(30) Priority: 10.02.2021 US 202163148027 P; 29.11.2021 US 202117536761
(71) Applicant: Sony Semiconductor Solutions Corporation, Atsugi-shi, Kanagawa 243-0014 (JP)
(72) Inventor: HYAKUDAI Toshihisa, Paramus. New Jersey 07652 (US); YAMADA Junya, Atsugi-shi, Kanagawa 243-0014 (JP); OTA Satoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/004156
(87) International publication number: WO 2022/172837

(57) **Abstract**

[Object]

To perform serial communication at high speed by combining different communication methods with each other.

[Solving Means]

A communication apparatus includes a communicating unit configured to add identification information identifying a data block to one set of the data block including a serial signal group, the serial signal group being transmitted from a master in synchronism with a clock and complying with SPI (Serial Peripheral Interface), and transmit the one set of the data block to a communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.

## Description

### [Technical Field]

The present disclosure relates to a communication apparatus, a communication system, and a communication method.

### [Background Art]

A technology for performing high-speed serial communication between a SerDes for a Master and a SerDes for a Slave has been proposed (see PTL 1).

An FDD (Frequency Division Duplexing) method and a TDD (Time Division Duplex) method, for example, are used in a case where serial communication is performed between the two SerDeses. In a case where there is a large difference between an amount of data transmitted from one SerDes to another SerDes and an amount of data transmitted from the other SerDes to the one SerDes, a difference in data transmission volume may be provided between an up direction and a down direction by employing the TDD method. The TDD method is a half-duplex communication method in which communications in the up direction and the down direction cannot be performed simultaneously, and only communication in one direction can be performed.

### [Citation List]

### [Patent Literature]

[PTL 1]
Japanese Patent Laid-open No. 2011-239011

### [Summary]

### [Technical Problem]

There is a serial communication standard referred to as SPI (Serial Peripheral Interface). SPI is a full-duplex communication method that enables up and down communications to be performed simultaneously. In a case where, while each of the two SerDeses described above performs communication with another communication apparatus by SPI, the SPI data is transmitted to the communication apparatus connected to the SerDeS on the opposite side which is connected to the SerDes itself, via the SerDes on the opposite side, the TDD method of the half-duplex communication method cannot transmit the SPI data of the full-duplex communication method as it is when a case of performing communication between the two SerDeses by the TDD method is assumed.

Accordingly, the present disclosure provides a communication apparatus, a communication system, and a communication method that can perform serial communication at high speed by combining different communication methods with each other.

### [Solution to Problem]

In order to solve the above problems, according to the present disclosure, there is provided a communication apparatus including a communicating unit configured to add identification information identifying a data block to one set of the data block including a serial signal group, the serial signal group being transmitted from a master in synchronism with a clock and complying with SPI (Serial Peripheral Interface), and transmit the one set of the data block to a communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.

The communication apparatus may include a memory configured to store a first serial signal group transmitted from the master in synchronism with the clock and complying with SPI, and store a second serial signal group transmitted from a slave in synchronism with the clock and complying with SPI, a packet encoder configured to convert the first serial signal group stored in the memory into a first packet of the predetermined communication protocol, and add the identification information to the first packet, and a packet decoder configured to convert a second packet of the predetermined communication protocol, the second packet being received from the communication partner apparatus, into the second serial signal group.

The packet encoder may select the identification information from multiple identification information candidates in order.

The first packet may include frequency information and polarity information of the clock and phase information of the clock with respect to a data signal of the first serial signal group complying with the SPI.

The first packet may include information indicating that the one set of the data block is included within the one frame period or information indicating that the multiple data blocks divided according to the multiple frame periods are included.

In a case where the multiple data blocks are included, the first packet may include a total number of the multiple data blocks and division position information of the data blocks.

The second packet may include at least one of identification information of the second packet, information indicating an operation state of the slave, and interrupt information from the slave.

The memory may transmit an interrupt signal to the master in a case where it is confirmed that data is transmitted from the slave on the basis of the interrupt information from the slave, and it is confirmed that the identification information of the first packet and the identification information of the second packet match each other.

The packet encoder may generate the first packet on the basis of the first serial signal group transmitted from the master irrespective of whether or not the interrupt information from the slave is received.

The first packet may include information of a slave select signal that selects the communication partner apparatus or the slave and is included in the first serial signal group complying with the SPI.

The packet encoder may transmit the first packet addressed to the communication partner apparatus or the slave selected by the slave select signal.

The communication apparatus may include a shift register configured to sequentially store each serial signal included in the first serial signal group in the memory in synchronism with the clock, and transmit each serial signal included in the second serial signal group to the master in order in synchronism with the clock.

The shift register may transmit the second serial signal group that is valid to the master in a case where identification information included in the second packet before being converted into the second serial signal group matches the identification information included in the first packet transmitted to the communication partner apparatus before the second packet is received.

The communicating unit may transmit the first packet in a first timing specified by the predetermined communication protocol and receive the second packet in a second timing specified by the predetermined communication protocol.

Under the communication protocol according to TDD (Time Division Duplex), the first packet may be transmitted and received between the communicating unit and the communication partner apparatus in a first period within each frame period, and the second packet may be transmitted and received between the communicating unit and the communication partner apparatus in a second period within each frame period.

According to the present disclosure, there is provided a communication apparatus including a communicating unit configured to add identification information identifying a data block to one set of the data block including a serial signal group that is transmitted from a slave in synchronism with a clock generated on the basis of clock frequency information included in a packet from a communication partner apparatus, and complies with SPI, and transmit the one set of the data block to the communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.

The communication apparatus may include a packet decoder configured to convert a first packet of the predetermined communication protocol, the first packet being received from the communication partner apparatus, into a first serial signal group complying with SPI, a clock generator configured to generate the clock on the basis of the clock frequency information included in the first serial signal group, a memory configured to store the first serial signal group in synchronism with the clock and store a second serial signal group transmitted from the slave in synchronism with the clock and complying with SPI, and a packet encoder configured to convert the second serial signal group stored in the memory into a second packet of the predetermined communication protocol and add the identification information to the second packet.

In a case where the second packet is transmitted to the communication partner apparatus in response to the first packet received from the communication partner apparatus, the packet encoder may add the same identification information as the identification information included in the first packet to the second packet.

The second packet may include information indicating that the one set of the data block transmitted within one frame period of the second serial signal group is included or information indicating that the multiple data blocks divided into the multiple frame periods and transmitted are included.

The second packet may include interrupt information that requests a master to read a state of the slave.

The communication apparatus may include a shift register configured to store each serial signal included in the second serial signal group in the memory and transmit each serial signal included in the first serial signal group to the slave.

The communicating unit may transmit the second packet in a first timing specified by the predetermined communication protocol and receive the first packet in a second timing specified by the predetermined communication protocol.

Under the communication protocol according to TDD (Time Division Duplex), the first packet may be transmitted and received between the communicating unit and the communication partner apparatus in a first period within each frame period, and the second packet may be transmitted and received between the communicating unit and the communication partner apparatus in a second period within each frame period.

According to the present disclosure, there is provided a communication system including a first communication apparatus and a second communication apparatus configured to transmit and receive packets under a predetermined communication protocol, the first communication apparatus including a first communicating unit configured to add identification information identifying a data block to one set of the data block including a serial signal group, the serial signal group being transmitted from a master in synchronism with a clock and complying with SPI (Serial Peripheral Interface), and transmit the one set of the data block to the second communication apparatus within one frame period of the predetermined communication protocol, or add identification information identifying each of multiple data blocks to the multiple data blocks each including a part of the serial signal group and transmit the multiple data blocks to the second communication apparatus in multiple frame periods, and the second communication apparatus including a second communicating unit configured to add identification information identifying a data block to one set of the data block including a serial signal group that is transmitted from a slave in synchronism with a clock generated on the basis of clock frequency information included in a packet from the first communication apparatus, and complies with SPI and transmit the one set of the data block to the first communication apparatus within one frame period of the predetermined communication protocol, or add identification information identifying each of multiple data blocks to the multiple data blocks each including a part of the serial signal group and transmit the multiple data blocks to the first communication apparatus in multiple frame periods.

According to the present disclosure, there is provided a communication method including adding identification information identifying a data block to one set of the data block including a serial signal group, the serial signal group being transmitted from a master in synchronism with a clock and complying with SPI (Serial Peripheral Interface), and transmitting the one set of the data block to a communication partner apparatus within one frame period of a predetermined communication protocol, or adding identification information identifying each of multiple data blocks to the multiple data blocks each including a part of the serial signal group and transmitting the multiple data blocks to the communication partner apparatus in multiple frame periods.

### [Brief Description of Drawings]

[FIG. 1]

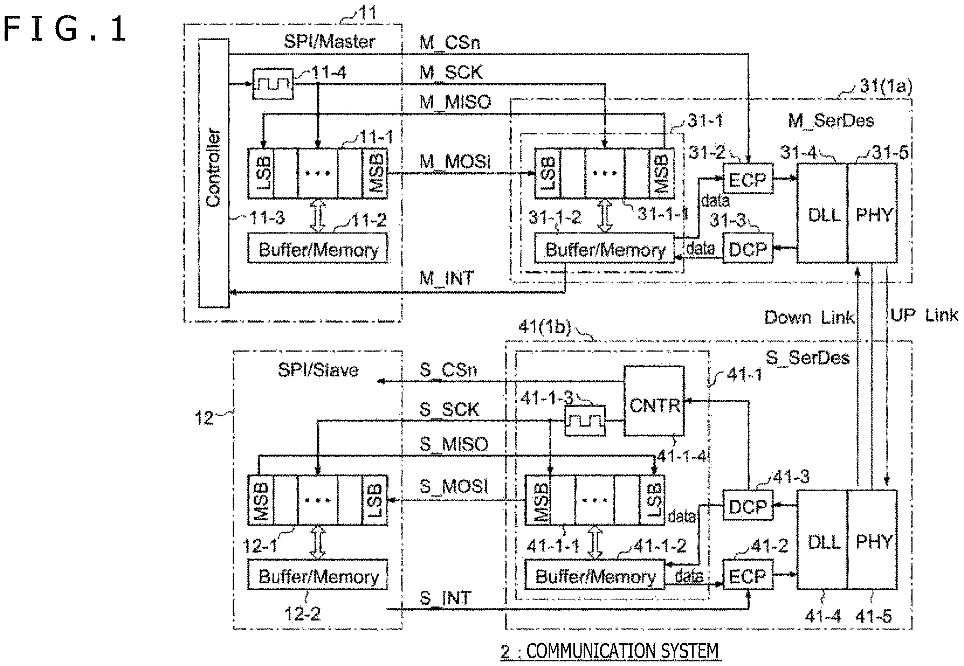

   FIG. 1 is a block diagram illustrating a general configuration of a communication system including communication apparatuses according to a first embodiment.
[FIG. 2]

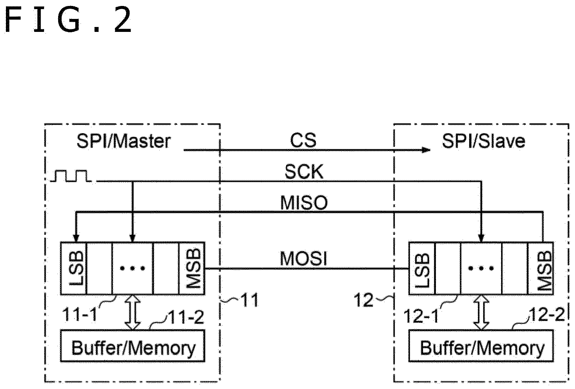

   FIG. 2 is a block diagram of a part related to SPI communication between an SPI/Master and an SPI/Slave.
[FIG. 3]

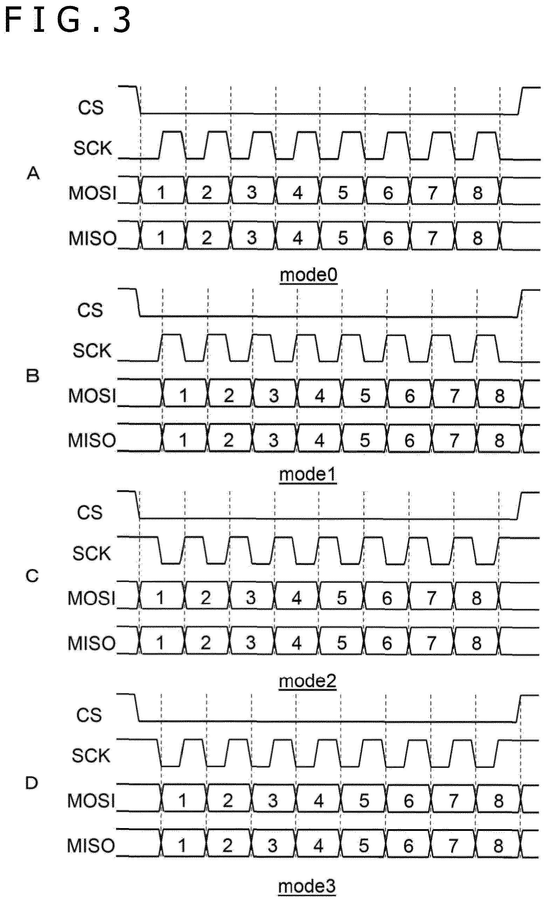

   FIG. 3 is a basic signal waveform chart of an SPI protocol.
[FIG. 4]

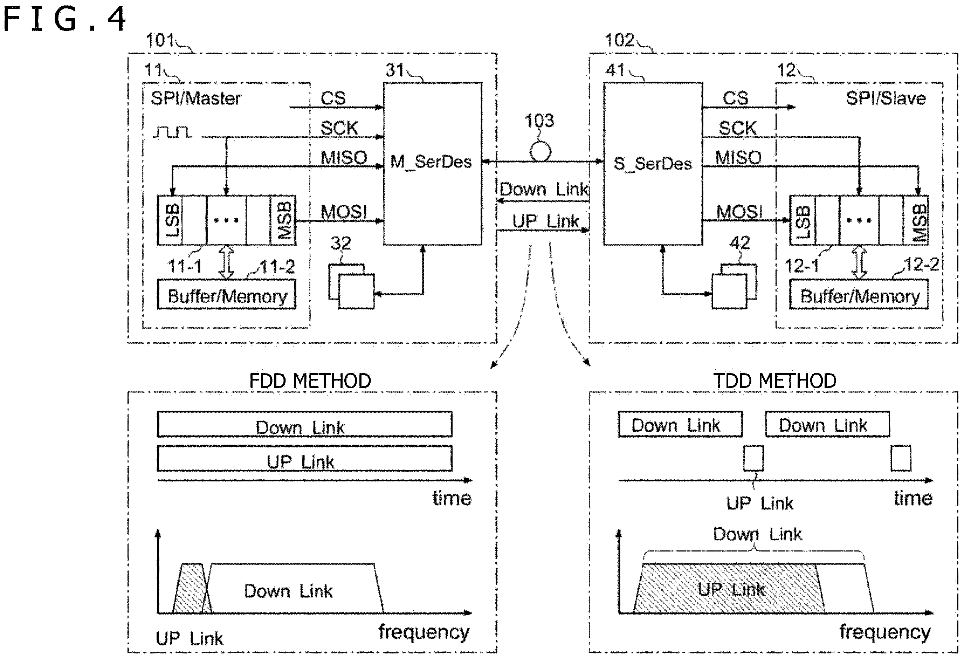

   FIG. 4 is a diagram of assistance in explaining a TDD method performed between an M_SerDes and an S_SerDes in FIG. 1.
[FIG. 5]

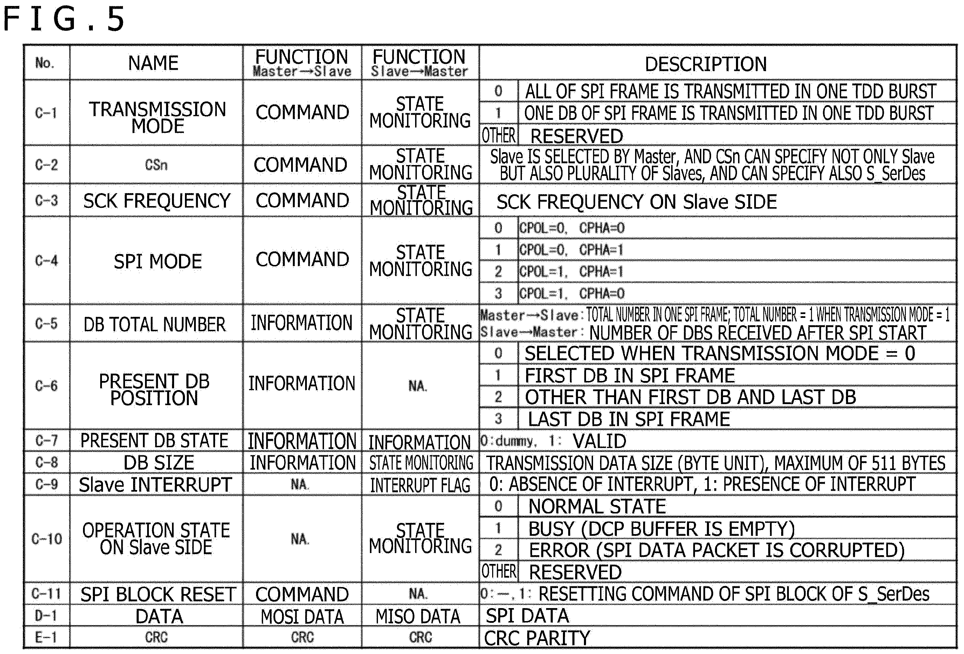

   FIG. 5 is a diagram of assistance in explaining information included in transmission packets generated by ECPs.
[FIG. 6]

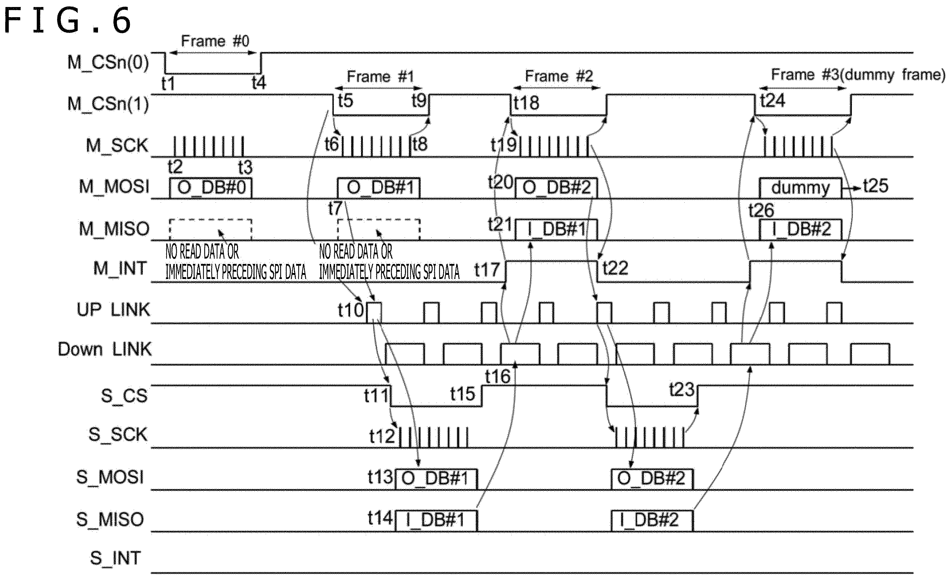

   FIG. 6 is a timing chart in which the SPI/Master performs communication with the SPI/Slave.
[FIG. 7A]

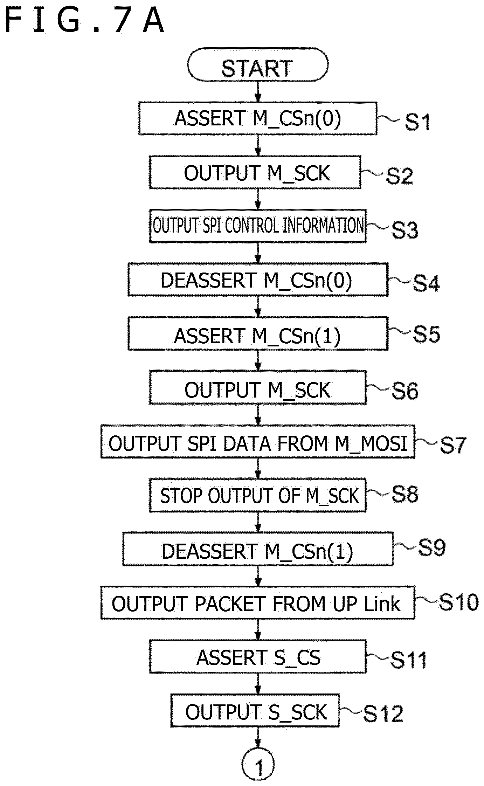

   FIG. 7A is a flowchart illustrating a processing procedure for communication performed by the SPI/Master with the SPI/Slave.
[FIG. 7B]

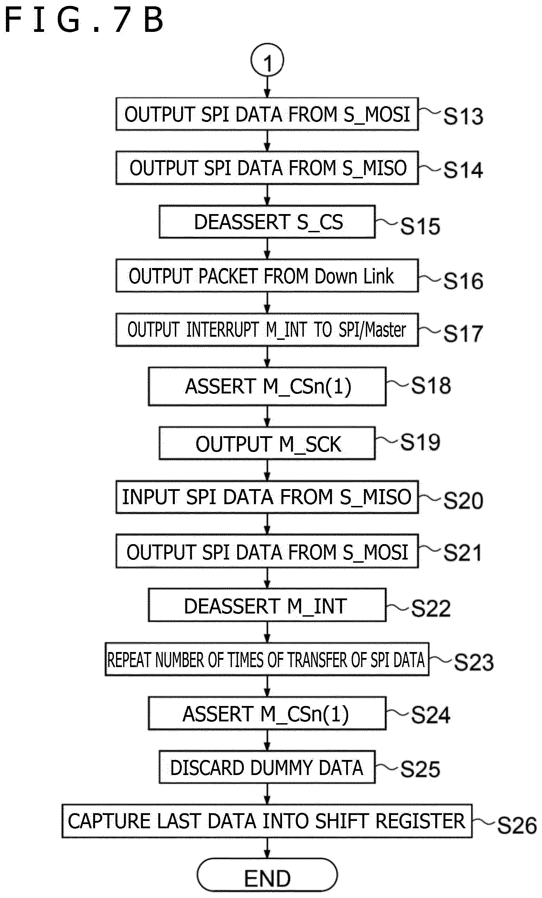

   FIG. 7B is a flowchart continued from FIG. 7A.
[FIG. 8]

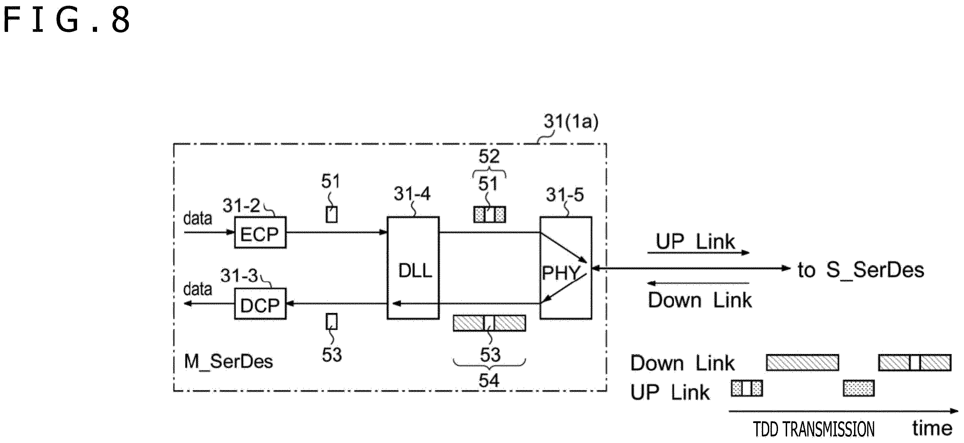

   FIG. 8 is a diagram schematically illustrating packets transmitted and received by an UP Link and a Down Link.
[FIG. 9]

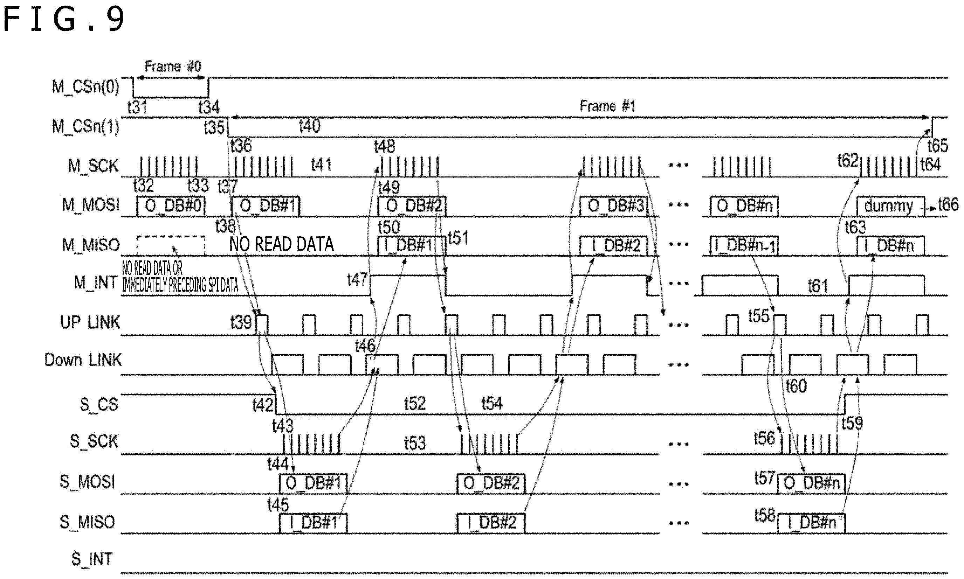

   FIG. 9 is a timing chart in a case where the processing of transmitting divided data within one frame period is repeated over multiple frames.
[FIG. 10A]

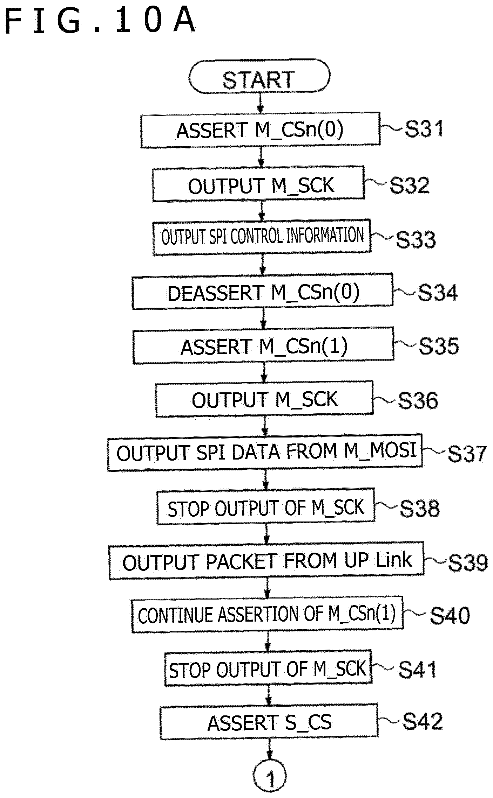

   FIG. 10A is a flowchart illustrating a processing procedure of the communication system that operates in the timings of FIG. 9.
[FIG. 10B]

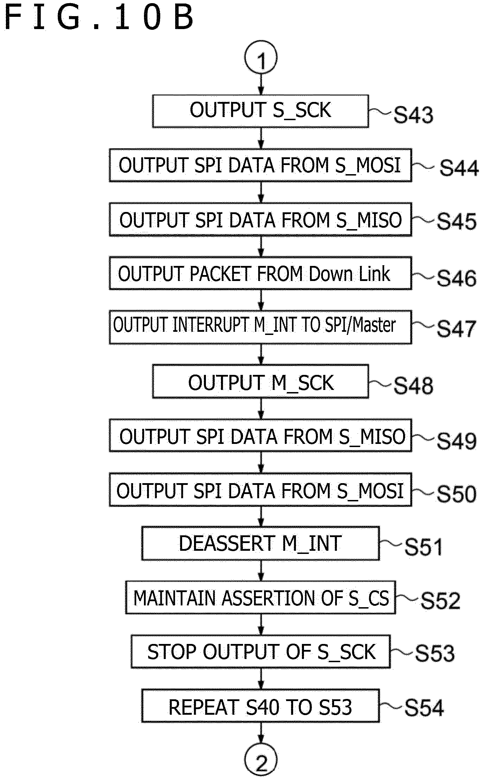

   FIG. 10B is a flowchart continued from FIG. 10A.
[FIG. 10C]

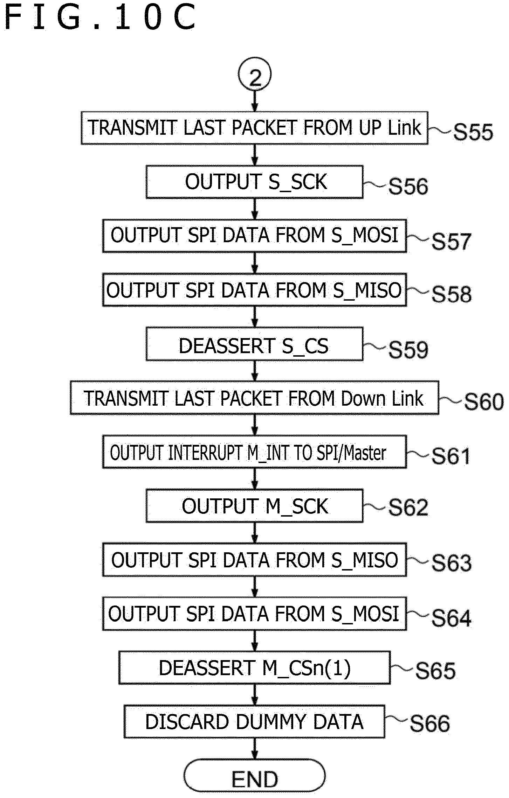

   FIG. 10C is a flowchart continued from FIG. 10B.
[FIG. 11]

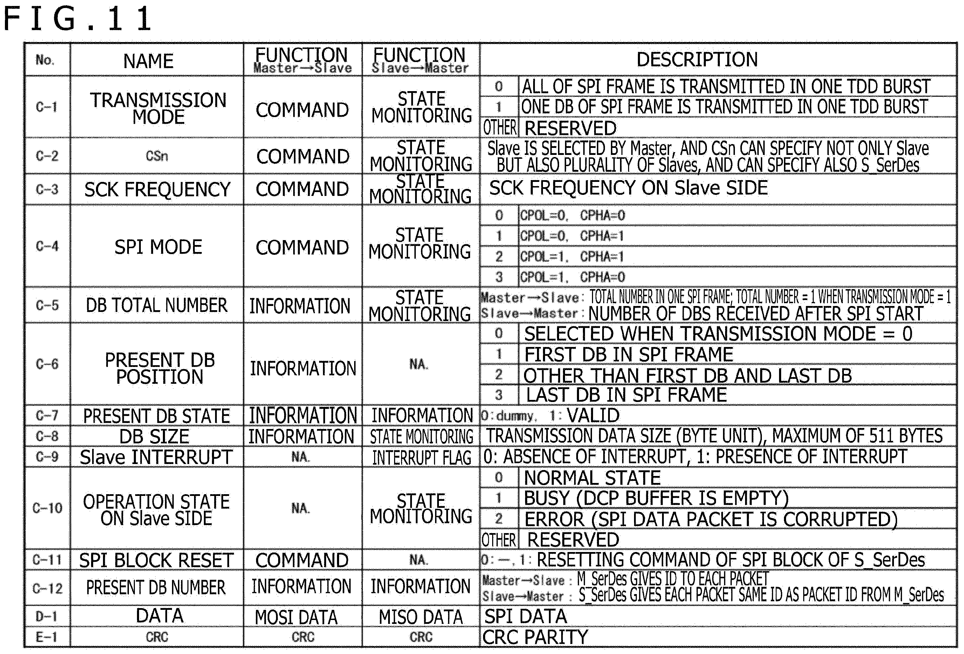

   FIG. 11 is a diagram of assistance in explaining information included in a transmission packet generated by an ECP according to a third embodiment.
[FIG. 12]

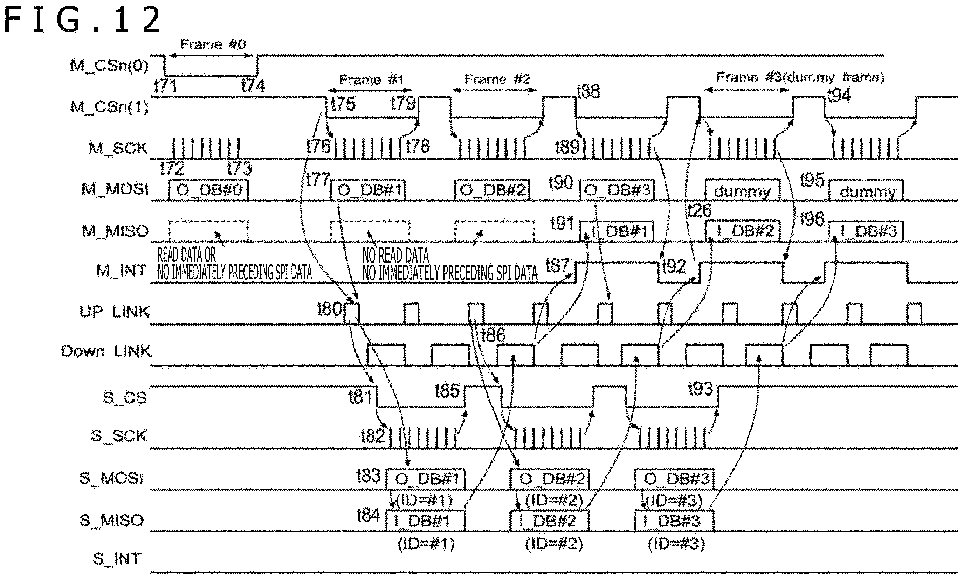

   FIG. 12 is a timing chart in which the SPI/Master performs communication with the SPI/Slave in the third embodiment.
[FIG. 13A]

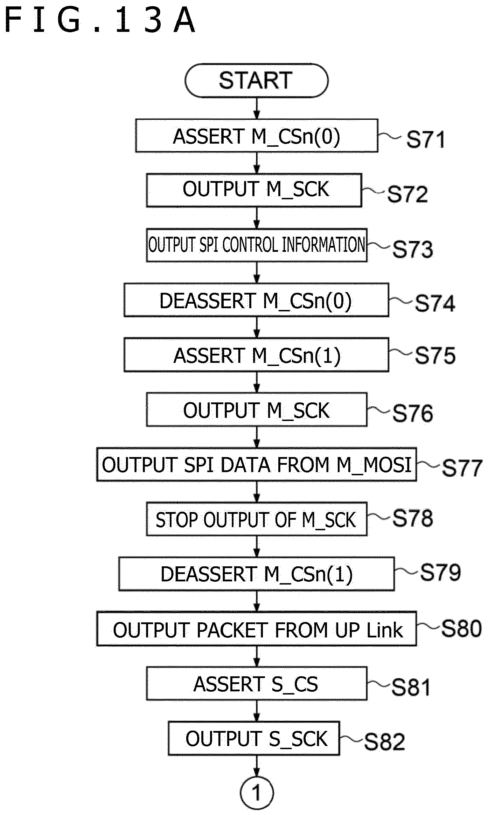

   FIG. 13A is a flowchart illustrating a processing procedure of a communication system according to the third embodiment.
[FIG. 13B]

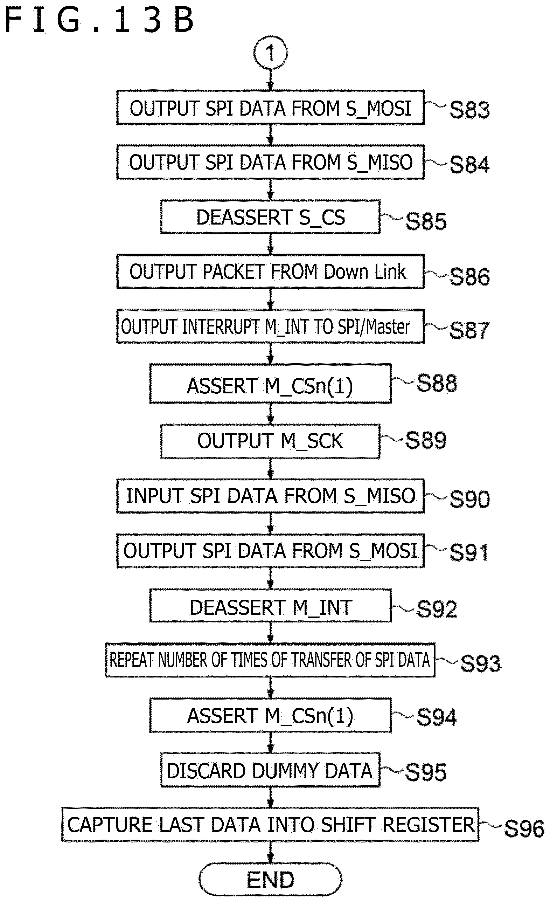

   FIG. 13B is a flowchart continued from FIG. 13A.
[FIG. 14]

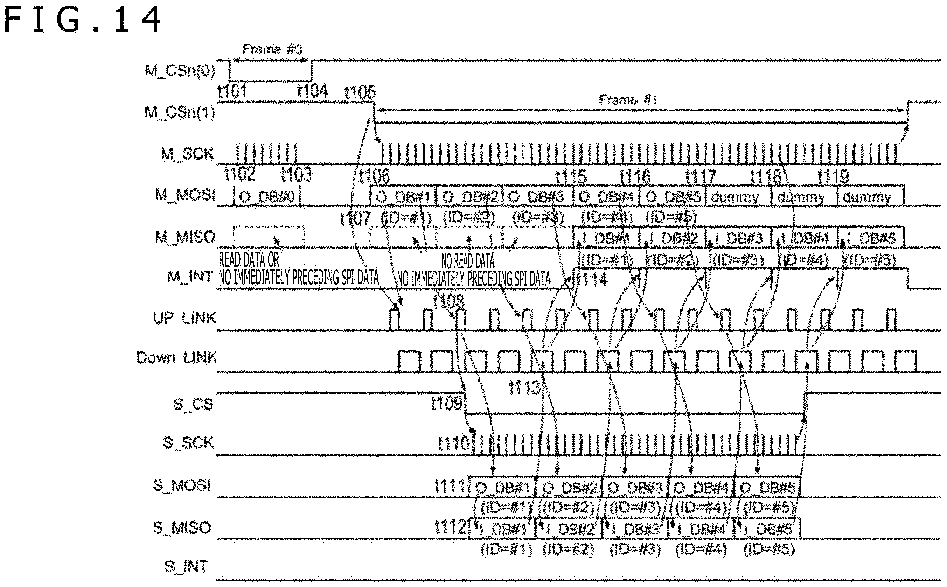

   FIG. 14 is a timing chart in which the SPI/Master performs communication with the SPI/Slave in a fourth embodiment.
[FIG. 15A]

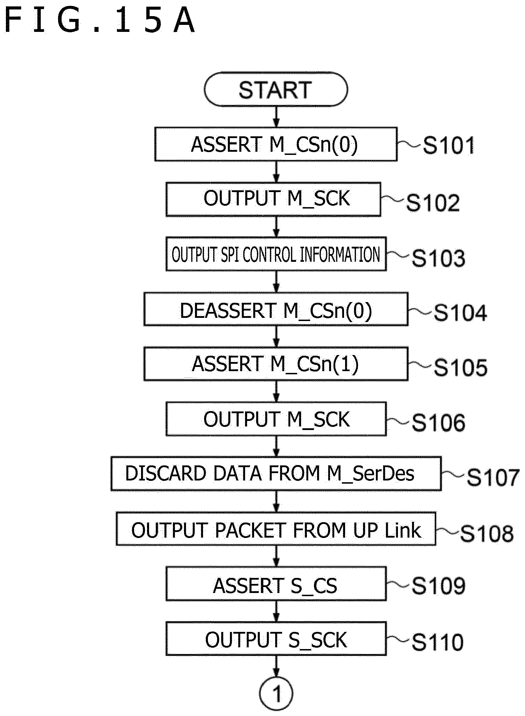

   FIG. 15A is a flowchart illustrating a processing procedure of a communication system according to the fourth embodiment.
[FIG. 15B]

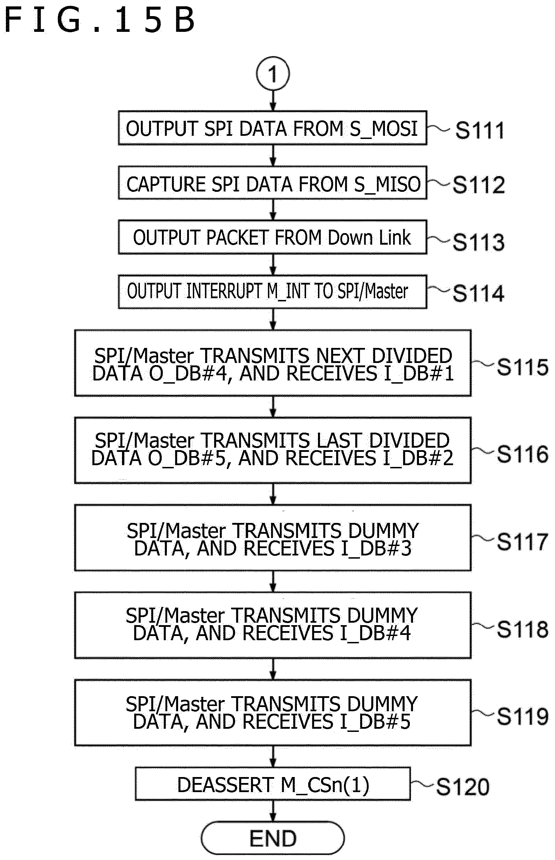

   FIG. 15B is a flowchart continued from FIG. 15A.
[FIG. 16]

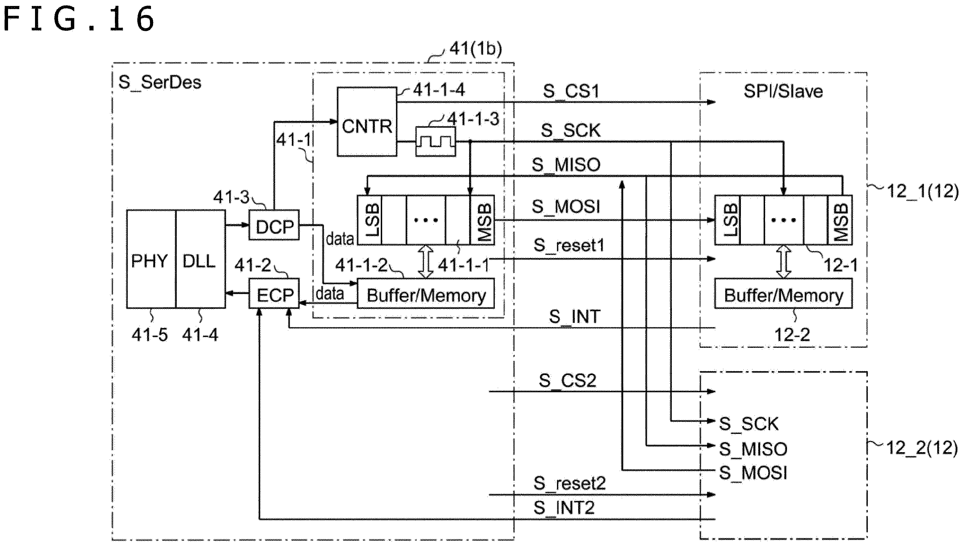

   FIG. 16 is a block diagram of principal parts of a communication system including a communication apparatus according to a fifth embodiment.
[FIG. 17]

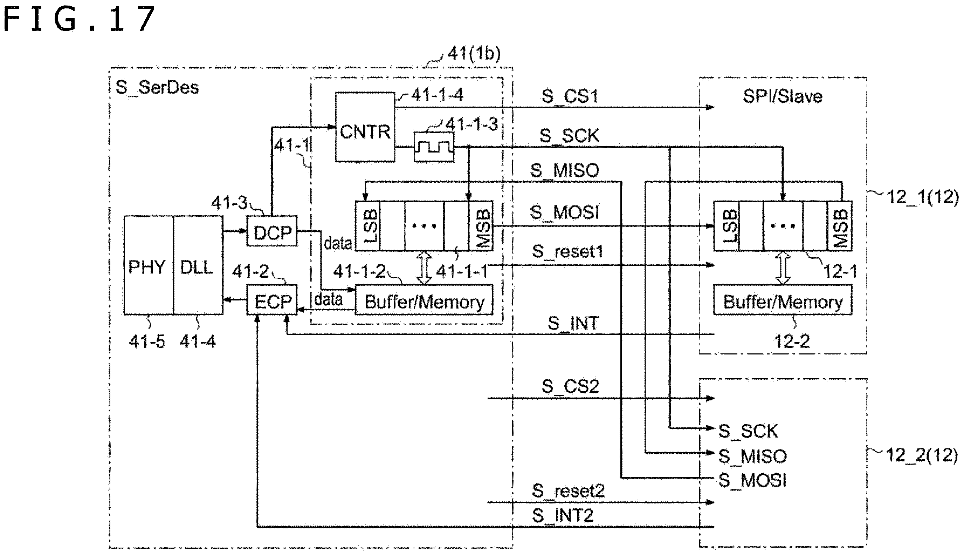

   FIG. 17 is a block diagram of principal parts of a communication system including a communication apparatus according to one modification of FIG. 16.

### [Description of Embodiments]

Embodiments of a communication apparatus, a communication system, and a communication method will hereinafter be described with reference to the drawings. In the following, description will be made centering on main constituent parts of the communication apparatus, the communication system, and the communication method. However, constituent parts and functions not illustrated or described can be present in the communication apparatus, the communication system, and the communication method. The following description does not exclude the constituent parts and functions not illustrated or described.

### (First Embodiment)

FIG. 1 is a block diagram illustrating a general configuration of a communication system 2 including communication apparatuses 1a and 1b according to a first embodiment. The communication system 2 of FIG. 1 includes an SPI/Master 11, a Master SerDes (M_SerDes) 31, an SPI/Slave 12, and a Slave SerDes (S_SerDes) 41. Of these, the M_SerDes 31 corresponds to the communication apparatus 1a, and the S_SerDes 41 corresponds to the communication apparatus 1b.

The SPI/Master 11 and the M SerDes 31 perform serial communication complying with SPI (the serial communication may hereinafter be referred to as SPI communication). Similarly, the SPI/Slave 12 and the S SerDes 41 perform serial communication complying with SPI (SPI communication). The M SerDes 31 and the S_SerDes 41 perform high-speed serial communication using a TDD method. In FIG. 1, a signal transmission path from the M SerDes 31 to the S_SerDes 41 will be referred to as an UP Link, and a signal transmission path from the S SerDes 41 to the M SerDes 31 will be referred to as a Down Link. In SPI communication, serial communication is performed in a protocol complying with the SPI standard (the protocol will hereinafter be referred to as an SPI protocol). In addition, in the present specification, serial data transmitted and received in SPI communication may be referred to as SPI data.

As will be described later, the M SerDes 31 includes a communicating unit (DLL 31-4) that transmits a serial signal group, the serial signal group being transmitted from a master (SPI Master 11) in synchronism with a clock and complying with SPI (Serial Peripheral Interface), as one set of a data block to a communication partner apparatus (the S SerDes 41) within one frame period of a predetermined communication protocol, or transmits the serial signal group as multiple data blocks divided according to multiple frame periods to the communication partner apparatus (the S SerDes 41). In addition, the S_SerDes 41 includes a communicating unit (DLL 41-4) that transmits a serial signal group, the serial signal group being transmitted from a slave (SPI_Slave 12) and complying with SPI, as one set of a data block to the communication partner apparatus (the M_SerDes 31) within one frame period of the predetermined communication protocol in synchronism with a clock generated on the basis of clock frequency information included in a packet from the communication partner apparatus (the M SerDes 31), or transmits the serial signal group as multiple data blocks divided according to multiple frame periods to the communication partner apparatus (the M_SerDes 31).

FIG. 2 is a block diagram of a part related to SPI communication between the SPI/Master 11 and the SPI/Slave 12. Incidentally, for simplification of the description, FIG. 2 illustrates an example in which the SPI/Master 11 and the SPI/Slave 12 directly perform serial communication complying with SPI.

As illustrated in FIG. 2, the SPI/Master 11 includes a shift register 11-1 and a buffer/memory 11-2. Similarly, the SPI/Slave 12 includes a shift register 12-1 and a buffer/memory 12-2.

The shift register 12-1 within the SPI/Slave 12 operates in synchronism with a clock SCK supplied from the SPI/Master 11. The shift register 11-1 within the SPI/Master 11 outputs serial data in order from an MSB (Most Significant Bit) side in synchronism with SCK. The output serial data is input to the LSB (Least Significant Bit) side of the shift register 12-1 within the SPI/Slave 12 via a MOSI pin. Serial data output from the MSB side of the shift register 12-1 within the SPI/Slave 12 is input to the LSB side of the shift register 11-1 within the SPI/Master 11 via a MISO pin. The data held by the shift register 11-1 within the SPI/Master 11 can be stored in the buffer/memory 11-2. In addition, the shift register 11-1 can hold data stored in the buffer/memory 11-2. Similarly, the data held by the shift register 12-1 within the SPI/Slave 12 can be stored in the buffer/memory 12-2. In addition, the shift register 12-1 can hold data stored in the buffer/memory 12-2.

FIG. 3 is a basic signal waveform chart of the SPI protocol. In the SPI protocol, the polarity of SCK during an idle time (high level in FIG. 3) of a slave select signal (CS signal) output by the SPI/Master 11 and the edge (a rising edge or a falling edge) of the clock (SCK) for latching data when the CS signal is set in an active state (low level in FIG. 3) provide four combinations. These four combinations are referred to as SPI modes. The SPI/Master 11 can optionally select one of the four SPI modes. The SPI/Master 11 knows, in advance, SPI modes that can be supported by the SPI/Slave, and needs to select modes corresponding to the SPI modes.

FIGS. 3A to 3D are signal waveform charts of the four SPI modes. In an SPI mode = 0 illustrated in FIG. 3A, SCK is Low during an idle time of the CS signal, and data is held at a rising edge of SCK. In an SPI mode = 1 illustrated in FIG. 3B, SCK is Low during an idle time of the CS signal, and data is held at a falling edge of SCK. In an SPI mode = 2 illustrated in FIG. 3C, SCK is High during an idle time of the CS signal, and data is held at a falling edge of SCK. In an SPI mode = 3 illustrated in FIG. 3D, SCK is High during an idle time of the CS signal, and data is held at a rising edge of SCK.

The frequency of SCK is not defined in the SPI protocol, but differs for each device that performs SPI communication. Thus, the SPI/Master 11 selects the frequency of SCK for each device that performs SPI communication. The SPI/Master 11 therefore needs to know, in advance, SCK frequencies that can be supported by each device that performs SPI communication.

A communication method using the SPI protocol will be described in the following. In the example of FIG. 2, communication under the SPI protocol is performed between the SPI/Master 11 and the SPI/Slave 12. One or multiple SPI/Slaves 12 may be connected to the SPI/Master 11. In a case where the multiple SPI/Slaves 12 are connected to the SPI/Master 11, the SPI/Master 11 has multiple CS signals corresponding to the multiple SPI/Slaves 12, and can select a Slave with which the SPI/Master 11 desires to communicate by the corresponding CS signal and perform communication with the Slave. The CS signal for selecting the SPI/Slave 12 with which the SPI/Master 11 desires to communicate is included in SPI control information, as will be described later. The SPI/Master 11 includes the SPI control information in SPI data, and transmits the SPI data to the M_SerDes 31.

In a case where the SPI/Master 11 performs SPI communication, the SPI/Master 11 sets the CS signal connected to the SPI/Slave 12 with which the SPI/Master 11 desires to communicate in an active state (Low in FIGS. 3A to 3D). In the present specification, setting various kinds of signals in an active state may be referred to as asserting, and setting the various kinds of signals in an idle state may be referred to as deasserting.

The SPI/Master 11 and the SPI/Slave 12 transfer data desired to be transferred from the respective buffer/memories 11-2 and 12-2 to the respective shift registers 11-1 and 12-1. The SPI/Master 11 generates SCK, supplies SCK to the shift register 11-1 of the SPI/Master 11 itself, and supplies SCK also to the shift register 12-1 within the SPI/Slave 12. Each of the shift registers 11-1 and 12-1 shifts data held therein on a bit-by-bit basis according to the toggling of SCK. When SCK is toggled as many times as the number of stages of the shift registers 11-1 and 12-1, the data of the shift registers 11-1 and 12-1 is replaced. The SPI/Master 11 thereafter changes the CS signal to an idle state (High in FIGS. 3A to 3D). The SPI/Master 11 and the SPI/Slave 12 can obtain data from the buffer/memories 11-2 and 12-2 by transferring the data of the shift registers 11-1 and 12-1 at that time point to the buffer/memories 11-2 and 12-2. The SPI communication is thereby ended.

FIG. 2 illustrates an example in which the SPI/Master 11 and the SPI/Slave 12 directly perform SPI communication with each other. However, in FIG. 1, the M SerDes 31 and the S SerDes 41 are arranged between the SPI/Master 11 and the M SerDes 31. In FIG. 1, the SPI/Master 11 and the M_SerDes 31 perform SPI communication with each other, the M SerDes 31 and the S SerDes 41 perform serial communication using the TDD method with each other, and the SPI/Slave 12 and the S_SerDes 41 perform SPI communication with each other.

FIG. 4 is a diagram of assistance in explaining the TDD method performed between the M_SerDes 31 and the S_SerDes 41 in FIG. 1. FIG. 4 illustrates, in a simplified manner, the internal configurations of the SPI/Master 11 and the SPI/Slave 12 illustrated in FIG. 1. In addition, FIG. 4 illustrates an example in which peripheral devices 32 and 42 are connected to the M_SerDes 31 and the S_SerDes 41, respectively.

The M_SerDes 31 and the S_SerDes 41 are connected to each other by a cable 103 of several meters to several tens of meters, for example. The M SerDes 31 and the S SerDes 41 perform high-speed serial communication with each other via the cable 103. In addition, multiple sets may be provided such that two devices having configurations similar to those of the M_SerDes 31 and the S_SerDes 41 in FIG. 4 are treated as a set, and each set may perform high-speed serial communication. The M SerDes 31 and the S SerDes 41 in FIG. 4 are widely applicable to uses in which a large amount of data is transmitted and received, as in a vehicle-mounted camera module or the like, for example.

The M SerDes 31 and the S SerDes 41 perform high-speed serial communication using the TDD method with each other. The lower right of FIG. 4 illustrates the timings and the frequency bands of the TDD method. In the TDD method, as illustrated on the right side of FIG. 4, one signal transmission period in an up direction and one signal transmission period in a down direction are each provided within one TDD cycle so as not to temporally overlap each other. The example of the TDD timing chart of FIG. 4 represents an example in which the signal transmission period of a signal in the up direction from the M_SerDes 31 to the S_SerDes 41 (the signal will be referred to as an UP Link) is excessively shorter than the signal transmission period of a signal in in the down direction from the S SerDes 41 to the M SerDes 31 (the signal will be referred to as a Down Link), that is, an example in which the signal ratio of the UP Link is excessively lower than the signal ratio of the Down Link. The signal ratios as in the TDD timing chart of FIG. 4 are obtained in a case where a video signal obtained by the imaging of a sensor within the S_SerDes 41 is transmitted to the M_SerDes 31, for example.

The right side of FIG. 4 illustrates a frequency band used for the signal transmission of the UP Link and a frequency band used for the signal transmission of the Down Link in the TDD method. As illustrated in the figure, the frequency bands in the signal transmission of the UP Link and the signal transmission of the Down Link in the TDD method partly overlap each other. In a case where the video signal obtained by the imaging of the sensor within the S SerDes 41 is transmitted to the M SerDes 31, for example, the signal transmission of the Down Link in the down direction in which there is a large signal amount necessitates a wider frequency band than the signal transmission of the UP Link in the up direction, and is therefore performed by using a wider frequency band including the frequency band used for the signal transmission of the UP Link in the up direction. In the TDD method, the signal transmission period of the Down Link in the down direction does not overlap the signal transmission period of the UP Link in the up direction, and thus there is no need for an echo cancelling circuit for separating the two signals from each other.

The M_SerDes 31 and the S_SerDes 41 according to the present embodiment are assumed to perform signal transmission by the TDD method. In some cases, however, the M_SerDes 31 and the S_SerDes 41 according to the present embodiment may be enabled to perform signal transmission also by an FDD method. The lower left of FIG. 4 illustrates the timings and the frequency bands of the FDD method. In the FDD method, the frequency band used for the signal transmission from the M_SerDes 31 to the S_SerDes 41 and the frequency band used for the signal transmission from the S SerDes 41 to the M SerDes 31 differ from each other. Therefore, the signal transmission from the M_SerDes 31 to the S_SerDes 41 and the signal transmission from the S_SerDes 41 to the M_SerDes 31 can be performed in the same timing, and the signal transmission in the up direction and the signal transmission in the down direction can be performed by using a whole period within one FDD cycle.

In addition, in the FDD method, the signal transmission in the up direction in which there is a large signal amount is performed by using a wide frequency band on a high frequency side. The signal transmission in the down direction in which there is a small signal amount is performed by using a narrow frequency band on a low frequency side. In the example of the lower left of FIG. 4, in order to enhance the efficiency of usage of frequencies, the frequency band used for the signal transmission in the up direction and the frequency band used for the signal transmission in the down direction are made to partly overlap each other. In addition, as illustrated on the lower left of FIG. 4, a signal transmission interval in the up direction and a signal transmission interval in the down direction in a time domain completely overlap each other. The presence of these overlaps necessitates an echo cancelling circuit. The echo cancelling circuit is a circuit that separates the signal in the up direction and the signal in the down direction from each other with high accuracy.

In the following, description will be made of an example in which the M SerDes 31 and the S SerDes 41 perform high-speed serial communication using the TDD method with each other, the M SerDes 31 performs serial communication complying with SPI with the SPI/Master 11, and the S SerDes 41 performs serial communication complying with SPI with the SPI/Slave 12.

Because serial communication using the TDD method rather than SPI is performed between the M SerDes 31 and the S SerDes 41, protocol conversion needs to be performed within the M SerDes 31 and the S_SerDes 41. In addition, whereas serial communication using SPI is a full-duplex communication method, serial communication using the TDD method is a half-duplex communication method. Thus, data from the SPI/Master 11 and the SPI Slave cannot be transmitted and received in an unchanged timing by the TDD method.

In the following, a configuration of the communication system 2 in FIG. 1 will be described in detail. The SPI/Master 11 in FIG. 1 includes a controller 11-3 and an SCK generator 11-4 in addition to including the shift register 11-1 and the buffer/memory 11-2 as illustrated in FIG. 4.

The controller 11-3 supplies a slave select signal (CS signal) for setting SPI communication in an active state to the M_SerDes 31 through an M_CSn pin. CS signals are provided so as to be equal in number to the number of devices that perform SPI communication with the SPI/Master 11. For example, in FIG. 1, different M_CSn pins are assigned for the M SerDes 31, the S SerDes 41, and the SPI/Slave 12, respectively. In the present specification, a pin that outputs a CS signal output from the SPI/Master 11 may be described as M_CSn(x). For example, M_CSn(0) is assigned to the M_SerDes 31, and M_CSn(1) is assigned to the SPI/Slave 12.

The controller 11-3 controls the operation of the SCK generator 11-4. The SCK generator 11-4 outputs SCK when one of the CS signals is in an active state. The shift register 11-1 performs a shift operation in synchronism with SCK.

The controller 11-3 detects that the SPI/Slave 12 has output an interrupt signal S_INT on the basis of an interrupt signal M_INT from the M_SerDes 31. With the interrupt signal M_INT as a trigger, the controller 11-3 starts the SPI communication of a next frame. Alternatively, the controller 11-3 similarly starts SPI communication also in a case where the controller 11-3 itself desires to transmit SPI data (at time t5 of M_CSn(1) in FIG. 6 to be described later).

The M_SerDes 31 is connected to the SPI/Master 11. The M_SerDes 31 has an SPI block 31-1 in order to perform data communication with the SPI/Master 11 according to the SPI protocol. The SPI block 31-1 includes a shift register 31-1-1 and a buffer/memory 31-1-2. When the controller 11-3 within the SPI/Master 11 sets the CS signal corresponding to the M SerDes 31 in an active state, and the SCK generator 11-4 outputs SCK, the shift register 31-1-1 outputs SPI data and supplies the SPI data to the SPI/Master 11 via the MISO pin in synchronism with this SCK. In addition, the shift register 31-1-1 captures SPI data output from the SPI/Master 11 via the MOSI pin in synchronism with SCK.

The controller 11-3 makes the SCK generator 11-4 stop outputting SCK when the CS signal is set in an idle state. The shift register 31-1-1 thereby holds a state immediately before SCK is stopped.

When the CS signal makes a transition to an idle state, the SPI block 31-1 within the M SerDes 31 transfers the whole of the data within the shift register 31-1-1 to the buffer/memory 31-1-2. Data transfer processing using the SPI protocol from the SPI/Master 11 to the M_SerDes 31 is thereby ended.

Incidentally, the data transfer from the shift register 31-1-1 to the buffer/memory 31-1-2 within the M SerDes 31 is dependent on an amount of data desired to be transferred by the SPI/Master 11 and the data capacity of the shift register 31-1-1. Hence, in a case where there is a fear of an overflow of data within the shift register 31-1-1 during the active state of the CS signal, a loss of data can be prevented by transferring the data within the shift register 31-1-1 to the buffer/memory 31-1-2 before the overflow.

In addition, the M_SerDes 31 includes a packet encoder (ECP) 31-2, a packet decoder (DCP) 31-3, a DLL 31-4, and a PHY layer block (PHY) 31-5. The ECP 31-2 within the M SerDes 31 converts the SPI data stored in the buffer/memory 31-1-2 into a packet (SPI packet) complying with the TDD method. The DLL 31-4 generates an UP Link packet by integrating the SPI packet generated by the ECP 31-2 with other transmission packets than the SPI packet. The PHY 31-5 transmits the UP Link packet to the S_SerDes 41 via the UP Link.

The S_SerDes 41 in FIG. 1 is connected to the SPI/Slave 12. The S_SerDes 41 includes an SPI block 41-1 in order to transmit and receive data to and from the SPI/Slave 12 according to the SPI protocol. The SPI block 41-1 includes a controller (CNTR) 41-1-4, an SCK generator 41-1-3, a shift register 41-1-1, and a buffer/memory 41-1-2. The controller 41-1-4 controls the timing and the frequency of SCK output from the SCK generator 41-1-3 on the basis of SPI control information from the SPI/Master 11. When the controller 41-1-4 sets the CS signal corresponding to the SPI/Slave 12 in an active state, and the SCK generator 41-1-3 outputs SCK, the shift register 41-1-1 outputs SPI data and supplies the SPI data to the SPI/Slave 12 via an S_MOSI pin in synchronism with SCK. In addition, SPI data output from the SPI/Slave 12 via an S_MISO pin is input to the shift register 41-1-1 in synchronism with SCK. In addition, the S SerDes 41 includes a packet encoder (ECP) 41-2, a packet decoder (DCP) 41-3, a DLL 41-4, and a PHY layer block (PHY) 41-5. The ECP 41-2 within the S SerDes 41 converts SPI data stored in the buffer/memory 41-1-2 into a packet (SPI packet) complying with the TDD method. The DLL 41-4 generates an UP Link packet by integrating the SPI packet generated by the ECP 41-2 with other transmission packets than the SPI packet. The PHY 41-5 transmits the UP Link packet to the S_SerDes 41 via the UP Link.

FIG. 5 is a diagram of assistance in explaining information included in the transmission packets generated by the ECPs 31-2 and 41-2. In FIG. 5, each piece of information within the transmission packets is associated with an identification symbol, an information name, a function in the transmission packet for performing data transmission from the SPI/Master 11 to the SPI/Slave 12, a function in the transmission packet for performing data transmission from the SPI/Slave 12 to the SPI/Master 11, and a description.

C-1 is a transmission mode, and is commanded as a command by the SPI/Master 11. The transmission mode included in the packet from the SPI/Slave 12 is used for state monitoring by the SPI/Master 11. When C-1 is 0, one set of a data block is transmitted within one frame period of TDD. When C-1 is 1, multiple data blocks divided according to multiple frame periods are transmitted.

C-2 is a slave select signal (CSn signal), and is commanded as a command by the SPI/Master 11. A CSn signal included in the packet from the SPI/Slave 12 is used for state monitoring by the SPI/Master 11. The CSn signal is a signal for selecting an SPI/Slave 12 with which the SPI/Master 11 desires to communicate. CSn signals not only allow a selection of each SPI/Slave 12 but also allow a selection of a SerDes (the M_SerDes 31 or the S_SerDes 41).

C-3 is an SCK frequency, and is commanded as a command by the SPI/Master 11. The SCK frequency included in the packet from the SPI/Slave 12 is used for state monitoring by the SPI/Master 11. C-3 is for the SPI/Master 11 to specify the SCK frequency on the SPI/Slave 12 side.

C-4 is an SPI mode, and is commanded as a command by the SPI/Master 11. The SPI mode included in the packet from the SPI/Slave 12 is used for state monitoring by the SPI/Master 11. For example, when C-4 is 0, the mode = 0 in FIG. 3A is selected, when C-4 is 1, the mode = 1 in FIG. 3B is selected, when C-4 is 2, the mode = 2 in FIG. 3C is selected, and when C-4 is 3, the mode = 3 in FIG. 3D is selected.

C-5 is a total number of data blocks DB, and is provided as information by the SPI/Master 11. The total number of DBs included in the packet from the SPI/Slave 12 is used for state monitoring by the SPI/Master 11. When C-1 is 0 (at a time of transmission of a divided DB), C-5 is 1. The SPI/Slave 12 returns the number of DBs received after SPI communication is started.

C-6 is the position of a present data block DB, and is provided as information by the SPI/Master 11. The information is not included in the packet from the SPI/Slave 12. When C-6 is 0, it is indicated that the information is invalid information. In a case where C-1 is 0, C-6 is 0. When C-6 is 1, C-6 indicates first divided data. When C-6 is 2, C-6 indicates divided data other than first and last divided data. When C-6 is 3, C-6 indicates the last divided data.

C-7 is the state of the present data block DB, and is provided as information by both the SPI/Master 11 and the SPI/Slave 12. When C-7 is 0, C-7 indicates dummy data. When C-7 is 1, C-7 indicates valid data.

C-8 is the size of the data block DB, and is provided as information by the SPI/Master 11. The data transmission size included in the packet from the SPI/Slave 12 is used for state monitoring by the SPI/Master 11. C-8 indicates the data transmission size in byte units. A maximum size is 511 bytes.

C-9 is interrupt information of the SPI/Slave 12, and is an interrupt flag not included in the packet transmitted by the SPI/Master 11 but included in the packet transmitted by the SPI/Slave 12. When C-9 is 0, C-9 indicates the absence of an interrupt. When C-9 is 1, C-9 indicates the presence of an interrupt.

C-10 is an operation state on the SPI/Slave 12 side, and is not included in the packet transmitted by the SPI/Master 11 but is included in the packet from the SPI/Slave 12. When C-10 is 0, C-10 indicates a normal state. When C-10 is 1, C-10 indicates a busy state (the DCP 31-3 is not empty). When C-10 is 2, C-10 indicates that an error has occurred (SPI data is corrupted).

C-11 is a reset of the SPI block 41-1, and is commanded as a command by the SPI/Master 11. C-11 is not included in the packet of the SPI/Slave 12. When C-11 is 0, no reset is made. When C-11 is 1, the SPI block 41-1 of the S_SerDes 41 is reset.

D-1 is SPI data transmitted together with C-1 to C-11 described above. The SPI data transmitted by the SPI/Master 11 is output from an M_MOSI pin. The SPI data transmitted by the SPI/Slave 12 is output from the S_MISO pin.

E-1 is CRC transmitted together with C-1 to C-11 and D-1 described above. E-1 is included in both the SPI data transmitted from the SPI/Master 11 and the SPI data transmitted from the SPI/Slave 12. CRC is used to detect an error in the control data C-1 to C-11 and the SPI data.

FIG. 6 is a timing chart in which the SPI/Master 11 performs communication with the SPI/Slave 12. FIG. 7A and FIG. 7B include a flowchart illustrating a processing procedure for the communication performed by the SPI/Master 11 with the SPI/Slave 12. FIG. 8 is a diagram schematically illustrating packets transmitted and received by the UP Link and the Down Link. FIGS. 6 to 8 illustrate a processing procedure for transmission and reception of one set of a data block in one frame period of TDD.

First, the SPI/Master 11 performs processing of generating the SPI control information to be used by the ECP 31-2 and the DCP 31-3 within the M SerDes 31, and transmitting the SPI control information to the M SerDes 31 (steps S1 to S4, times t1 to t4). The SPI control information, for example, includes an SPI transmission mode, SCK frequency information, an SPI mode, and the size and number of data blocks DB at a time of SPI communication. The SPI/Master 11 stores the SPI control information in the buffer/memory 11-2 in advance.

The controller 11-3 within the SPI/Master 11 sets M CSn(0) in an active state (Low) (asserts M_CSn(0)) in order to perform SPI communication with the M_SerDes 31 (step S1, time t1).

The controller 11-3 within the SPI/Master 11 makes a clock M_SCK output by controlling the SCK generator 11-4 (step S2, time t2). The SPI control information stored in the buffer/memory 11-2 is sequentially read out and transferred to the shift register 11-1 in synchronism with the clock M_SCK. The transferred SPI control information includes the transmission mode, the SCK frequency information, the SPI mode, the transmission data size, the number of data blocks, and the like. The shift register 11-1 sequentially outputs the SPI control information in synchronism with the clock M_SCK (steps S2 to S3, times t2 to t3). This SPI control information is input to the M SerDes 31 via the M_MOSI pin. The shift register 31-1-1 within the M SerDes 31 captures the SPI control information from the SPI/Master 11 in synchronism with M_SCK.

In parallel with capturing the SPI control information from the SPI/Master 11, the shift register 31-1-1 transmits data held in the shift register 31-1-1 to the SPI/Master 11 via the M_MISO pin in synchronism with M_SCK. This data is invalid data, and is therefore indicated by a broken line from time t2 to t3 in FIG. 6. The SPI/Master 11 discards this data after receiving the data.

When the data transfer of the SPI/Master 11 is completed, the controller 11-3 within the SPI/Master 11 makes the SCK generator 11-4 stop generating M_SCK, and deasserts M_CSn(0) to an idle state (step S4, time t4). When M_SCK is stopped, the shift register 31-1-1 within the M_SerDes 31 transfers the SPI control information from the SPI/Master 11 which is held in the shift register 31-1-1, to the buffer/memory 31-1-2.

The buffer/memory 31-1-2 within the M SerDes 31 transfers the SPI control information from the SPI/Master 11 to the ECP 31-2. The ECP 31-2 converts the SPI control information into an SPI packet.

Next, the SPI/Master 11 transmits SPI data to the M SerDes 31 for a purpose of performing data transmission to the SPI/Slave 12. Specifically, the controller 11-3 within the SPI/Master 11 changes (asserts) M_CSn(1) corresponding to the SPI/Slave 12 from an idle state to an active state (step S5, time t5).

In addition, the controller 11-3 makes the SCK generator 11-4 output M_SCK (step S6, time t6). The buffer/memory 11-2 reads the data to be transmitted to the SPI/Slave 12 by an amount corresponding to the transmission data size, and inputs the data to the shift register 11-1. The shift register 11-1 sequentially outputs the data for the SPI/Slave 12 via the M_MOSI pin in synchronism with M_SCK (step S7, time t7).

The shift register 31-1-1 within the M SerDes 31 sequentially captures the data output from the SPI/Master 11 into the shift register 31-1-1 in synchronism with SCK. When the data transfer of an amount corresponding to the transmission data size is completed, the controller 11-3 within the SPI/Master 11 makes the SCK generator 11-4 stop outputting M_SCK (step S8, time t8). Thereafter, the controller 11-3 of the SPI/Master 11 sets M CSn(1) to an idle state (deasserts M_CSn(1)). The controller 11-3 then ends the SPI communication (step S9, time t9).

When M_SCK is stopped, the M SerDes 31 transfers the data held in the shift register 31-1-1 to the buffer/memory 31-1-2. The buffer/memory 31-1-2 transfers the data transferred from the shift register 31-1-1 to the ECP 31-2. The ECP 31-2 generates data including the SPI control information received by the communication from time t1 to t3, the CS signal (M_CSn(1)) corresponding to the SPI/Slave 12, and Data for the SPI/Slave 12. The ECP 31-2 adds a flag indicating that a packet is valid to the generated data, and thereby generates a transmission packet.

The ECP 31-2 sets the generated transmission packet as an SPI packet 51 as illustrated in FIG. 8, and transmits the SPI packet 51 to the DLL 31-4. The DLL 31-4 generates an UP Link packet 52 by integrating the SPI packet 51 from the ECP 31-2 with other transmission packets, and outputs the UP Link packet 52 to the PHY layer block 31-5. The PHY layer block 31-5 outputs the UP Link packet 52 received thereby to the cable 103 according to the UP Link output timing of TDD (step S10, time t10).

The S SerDes 41 performs communication with the M SerDes 31 by the TDD method, and performs SPI communication with the SPI/Slave 12. The PHY layer block 41-5 within the S SerDes 41 receives the UP Link Packet from the M SerDes 31 via the cable 103, and outputs the UP Link Packet to the Link layer block (DLL) 41-4.

The Link layer block 41-4 within the S SerDes 41 extracts the SPI packet including the SPI data from the UP Link Packet, and outputs the SPI packet to the packet decoder (DCP) 41-3. The DCP 41-3 detects that the SPI/Slave 12 is an SPI communication target on the basis of the CSn information (C-2) within the SPI packet received by the DCP 41-3. Then, in order to start SPI communication with the SPI/Slave 12, the controller 41-1-4 detects that all of the SPI data is transmitted on the basis of the transmission mode information (C-1) within the SPI packet, and obtains the number of SCK cycles necessary for one time of SPI communication on the basis of the number of pieces of SPI data (C-5) and the size of the SPI data (C-8). The controller 41-1-4 thereafter sets a Slave select signal S_CS in an active state (asserts the Slave select signal S_CS) (step S11, time t11).

Next, the controller 41-1-4 within the S_SerDes 41 obtains the SCK frequency information (C-3) included in the SPI packet, and makes the SCK generator 41-1-3 output S_SCK at the obtained frequency (step S12, time t12). At this time, a phase relation between S CS and SCK is in accordance with an SPI mode (C-4) within the SPI packet. The S_SerDes 41 is thereby enabled to transfer the SPI data to the SPI/Slave 12. The data to be transferred to the SPI/Slave 12 is the SPI packet (D-1), and is stored in the buffer/memory 41-1-2.

The shift register 41-1-1 within the S SerDes 41 sequentially outputs the SPI data transferred from the buffer/memory 41-1-2 from the S MOSI pin according to SCK supplied from the SCK generator 41-1-3 (step S13, time t13). In parallel with this, SPI data output from the SPI/Slave 12 to the S_MISO pin is stored in the shift register 41-1-1, and is thereafter transferred to the buffer/memory 41-1-2 at an appropriate time.

The SPI/Slave 12 sequentially captures the SPI data from the S_MOSI pin of the S_SerDes 41 into the shift register 12-1 in synchronism with S_SCK, and sequentially outputs the data held by the shift register 12-1 from the S_MISO pin (step S14, time t14).

After the controller (41-1-4) drives S_SCK for a length corresponding to the set SPI data size (C-8), the controller (41-1-4) stops SCK and returns S_CS to an idle state (deasserts S_CS) in order to end the SPI communication (step S15, time t15). In parallel with this, the SPI/Slave 12 transfers the SPI data from the S_MOSI pin from the shift register 12-1 to the buffer/memory 12-2 at an appropriate time while receiving the SPI data from the S_MOSI pin of the S SerDes 41. Consequently, the reception of the data from the SPI/Master 11 is ultimately completed.

The buffer/memory 41-1-2 transfers the SPI data received from the SPI/Slave 12 to the packet encoder (ECP) 41-2 in order to transmit the SPI data to the SPI/Master 11. The ECP 41-2 adds the SPI control information obtained in the SPI packet by the ECP 41-2 itself to an SPI packet 53 together with the received SPI data. In addition, the ECP 41-2 adds, to the SPI packet, the information of (C-10) in FIG. 5 which indicates the operation state of the SPI/Slave 12, and the CRC of (E-1).

In addition, in a case where the SPI/Slave 12 outputs the interrupt signal (C-9), the ECP 41-2 includes also information regarding the interrupt signal in the SPI packet 53. In this case, the SPI packet 53 does not convey the SPI data from the SPI/Slave 12. A reason for providing the interrupt signal is that, in the SPI protocol, only the SPI/Master 11 controls the CS signals and SCK, and the SPI/Slave 12 cannot actively output data. Thus, the interrupt signal is issued to wait for an instruction from the SPI/Master 11.

The Link layer block (DLL) 41-4 generates a Down Link packet 54 by integrating the SPI packet 53 received from the ECP 41-2 with other transmission packets, and outputs the Down Link packet 54 to the PHY layer block 41-5. The PHY layer block 41-5 outputs the Down Link packet 54 received thereby to the cable 103 according to the Down Link output timing (step S16, time t16).

The PHY layer block 31-5 of the M SerDes 31 receives the Down Link packet including the SPI packet 53 from the SPI/Slave 12, the Down Link packet being output from the S SerDes 41. The PHY layer block 31-5 outputs the Down Link packet to the DLL 31-4. The DLL 31-4 extracts the SPI packet 53 from the Down Link packet 54 received thereby, and outputs the SPI packet 53 to the packet decoder (DCP) 31-3.

The DCP 31-3 within the M SerDes 31 receives the packet including I_DB#1 transmitted to the Master 11 at the same time as the reception of SPI data O_DB#1 from the Master 11, and stores I_DB#1 in the buffer/memory 31-1-2. In order to indicate that the valid SPI data I_DB#1 is returned from the SPI/Slave 12, the buffer/memory 31-1-2 asserts the interrupt signal M_INT (step S17, time t17). Receiving the interrupt signal M_INT, the controller 11-3 of the SPI/Master 11 starts SPI communication to read, from the M SerDes 31, the SPI data from the SPI/Slave 12, and sets M_CSn(1) in an active state (asserts M_CSn(1)) (step S18, time t18).

The controller 11-3 of the SPI/Master 11 makes M_SCK (11-10-2) output by controlling the SCK generator 11-4 (step S19, time t19). The shift register 11-1 sequentially captures data from the M_MISO pin by an amount corresponding to the transmission data size (C-8) set in a Frame #1 in synchronism with SCK. At this time, the buffer/memory 31-1-2 within the M SerDes 31 transfers the data from the SPI/Slave 12 to the shift register 31-1-1 at an appropriate time. The shift register 31-1-1 sequentially outputs the data in synchronism with the SCK generator 11-4, as described earlier. This data is captured from the M_MISO pin (step S20, time t20). In parallel with this, the SPI/Master 11 reads SPI data desired to be transferred to the SPI/Slave 12 next from the buffer/memory 11-2, captures the SPI data into the shift register 11-1, and sequentially outputs the SPI data from the shift register 11-1 and from the M_MOSI pin (step S21, time t21). After the necessary data is read, the buffer/memory 31-1-2 returns the interrupt signal M_INT to an idle state (deasserts the interrupt signal M_INT) (step S22, time t22).

The transfer of the SPI data between the SPI/Master 11 and the SPI/Slave 12 is completed by the operations thus far. The series of operations described above is repeated a number of times of transfer of necessary SPI data (step S23, time t23).

When the SPI/Master 11 reads last SPI data from the SPI/Slave 12, the SPI/Master 11 asserts M_CSn(1) in order to output dummy data (step S24, time t24). This dummy data is invalid data, and does not need to be transferred to the SPI slave. Thus, the dummy data is discarded without being transferred from the shift register 31-1-1 of the M_SerDes 31 to the buffer/memory 31-1-2 (step S25, time t25). The last data from the SPI/Slave 12 is output from the shift register 31-1-1 within the M SerDes 31 through the M_MISO pin, and is captured into the shift register 11-1 within the SPI/Master 11 (step S26, time t26) .

Thus, in the first embodiment, one set of data transmitted to the M_SerDes 31 by the SPI/Master 11 through SPI communication can be transmitted to the S SerDes 41 via the UP Link within one frame period of the TDD method, and one set of data transmitted to the S SerDes 41 by the SPI/Slave 12 through SPI communication can be transmitted to the M_SerDes 31 via the Down Link. Consequently, serial communication between the SPI/Master 11 and the SPI/Slave 12 can be performed via the M_SerDes 31 and the S_SerDes 41 by combining the SPI communication of the full-duplex communication method and the TDD communication of the half-duplex communication method with each other.

### (Second Embodiment)

A second embodiment divides data to be transmitted and received by SPI communication into multiple frame periods of the TDD method, and transmits and receives the data.

A communication system 2 according to the second embodiment is configured in a similar manner to FIG. 1, but is different in terms of SPI control information that the SPI/Master 11 transmits to the M_SerDes 31.

FIG. 9 is a timing chart in a case where the processing of transmitting divided data within one frame period is repeated over multiple frames. FIG. 10A, FIG. 10B, and FIG. 10C include a flowchart illustrating a processing procedure of the communication system 2 that operates in the timings of FIG. 9.

Steps S31 to S38 in FIG. 10A (times t31 to t38) are similar to steps S1 to S8 in FIG. 7 (times t1 to t8). The SPI/Master 11 generates the SPI control information, and sets the SPI control information in the ECP 31-2 and the DCP 31-3 within the M_SerDes 31. Processing operations in step S39 and the subsequent steps are also basically similar to those of FIG. 7A and FIG. 7B. However, in FIG. 9, FIG. 10A, FIG. 10B, and FIG. 10C, data transmitted in one SPI frame is divided into multiple pieces of data, and each of the multiple pieces of divided data is transmitted in one frame period of TDD. A signal transmitted in one frame period of TDD is referred to as a TDD burst signal.

Until completion of the transfer of all of the divided data in the SPI frame, the Slave Select signal M_CSn(1) between the SPI/Master 11 and the M_SerDes 31 and the Slave Select signal S_CS between the S_SerDes 41 and the SPI/Slave 12 continue to be in an active state.

The SPI/Master 11 asserts the CS signal (M_CSn(1)) in order to start the transmission of SPI data (step S35, time t35). The SPI/Master 11 makes the SCK generator 11-4 output M_SCK for a purpose of transmitting one piece of divided data (data block DB) (step S36, time t36).

Next, in synchronism with SCK, the SPI/Master 11 sequentially outputs the SPI data from the shift register 11-1, and outputs the SPI data from the M_MOSI pin (step S37, time t37). In addition, the SPI/Master 11 outputs the CS signal corresponding to the SPI/Slave 12 as a communication target to the M SerDes 31 (step S38, time t38). Next, the ECP 31-2 within the M SerDes 31 generates a packet including the SPI data and the CS signal (step S39, time t39). The PHY layer block 31-5 generates an UP Link packet by integrating this packet with other transmission packets. This UP Link packet is transmitted to the S_SerDes 41 via the UP Link.

The SPI/Master 11 continues to assert the CS signal until all of the divided data is transmitted (step S40, time t40). The SPI/Master 11 stops the output of M SCK from the SCK generator 11-4 until next divided data is transmitted (step S41, time t41).

The S SerDes 41 obtains the CS signal and the SPI data from the packet received thereby, and asserts S_CS (step S42, time t42). The controller 41-1-4 within the S SerDes 41 makes the SCK generator 41-1-3 output S_SCK (step S43, time t43). The S SerDes 41 temporarily stores the SPI data within the received packet in the buffer/memory 41-1-2, and thereafter transfers the SPI data to the shift register 41-1-1. The shift register 41-1-1 sequentially outputs the data in synchronism with S_SCK. The output data is input from the S_MOSI pin to the SPI/Slave 12 (step S44, time t44). In addition, data output from the shift register 12-1 within the SPI/Slave 12 in synchronism with S_SCK is input from the S_MISO pin to the S_SerDes 41 (step S45, time t45).

The DLL 41-4 within the S SerDes 41 generates a transmission packet including the data from the S_MISO pin. The PHY layer block 41-5 transmits the transmission packet to the Down Link in a timing specified by the TDD method (step S46, time t46).

The DLL 31-4 within the M SerDes 31 transmits an SPI packet included in the transmission packet transmitted from the S SerDes 41 to the DCP 31-3. The DCP 31-3 receives the packet including I_DB#1 transmitted to the Master 11 at the same time as the reception of the SPI data O_DB#1 from the Master 11, and stores I_DB#1 in the buffer/memory 31-1-2. In order to indicate that the valid SPI data I_DB#1 is returned from the SPI/Slave 12, the buffer/memory 31-1-2 asserts the interrupt signal M INT (step S47, time t47).

When the SPI/Master 11 detects that M_INT is asserted, the SPI/Master 11 makes the SCK generator 11-4 output M_SCK (step S48, time t48). The buffer/memory 11-2 transfers data to be transmitted next to the shift register 11-1. The shift register 11-1 outputs the SPI data from the M_MOSI pin in synchronism with M_SCK (step S49, time t49) . In parallel with this, the data output from the M SerDes 31 via the M_MISO pin is captured into the shift register 11-1 (step S50, time t50).

When the SPI/Master 11 reads all of the data from the M SerDes 31, the SPI/Master 11 returns M_INT to an idle state (deasserts M_INT) (step S51, time t51).

The S SerDes 41 maintains the active state (assertion) of S_CS until all of the divided data is transmitted (step S52, time t52). In addition, the SCK generator 41-1-3 within the S SerDes 41 stops the output of S_SCK until the next SPI data is transmitted from the M_SerDes 31 (step S53, time t53).

Thereafter, the processing operation of steps S40 to S53 is repeated (step S54, time t54). When the M SerDes 31 transmits a last divided packet by the UP Link (step S55, time t55), the S_SerDes 41 outputs S_SCK (step S56, time t56). Then, the S SerDes 41 outputs SPI data via the S_MOSI pin (step S57, time t57), and receives last SPI data from the SPI/Slave 12 via the S_MISO pin (step S58, time t58).

When the S_SerDes 41 completes receiving the last SPI data, the S_SerDes 41 sets S_CS in an idle state (deasserts S_CS) (step S59, time t59). In addition, the S SerDes 41 transmits a transmission packet including the last SPI data to the M_SerDes 31 via the Down Link (step S60, time t60) .

The M SerDes 31 sets M INT in an active state as in step S47 (step S61, time t61). In addition, the M SerDes 31 makes the SCK generator 11-4 within the SPI/Master 11 output M_SCK (step S62, time t62). The data output from the shift register 31-1-1 via the M_MISO pin is captured into the shift register 11-1 within the SPI/Master 11 in synchronism with M_SCK (steps S63 to S64, times t63 to t64). When the SPI/Master 11 captures all of the data, the SPI/Master 11 sets the CS signal in an idle state (step S65, time t65). In addition, data output from the shift register 11-1 in step S63 is a dummy, and is therefore discarded (step S66, time t66).

Thus, the second embodiment can transmit each of multiple pieces of divided data which is obtained by dividing one set of data transmitted to the M SerDes 31 by the SPI/Master 11 through SPI communication, to the S SerDes 41 via the UP Link in multiple frame periods of the TDD method, and transmit each piece of the divided data which is obtained by dividing one set of data transmitted to the S_SerDes 41 by the SPI/Slave 12 through SPI communication, to the M_SerDes 31 via the Down Link in multiple frame periods of the TDD method.

### (Third Embodiment)

In the first and second embodiments, the SPI/Master 11 starts SPI communication with the SPI/Slave 12, data output by the SPI/Slave 12 is transmitted from the S SerDes 41 to the M SerDes 31 in response to a request from the SPI/Master 11, and the M SerDes 31 transmits the interrupt signal M_INT to the SPI/Master 11. With the interrupt signal M_INT as a trigger, the SPI/Master 11 starts the SPI communication of a next frame. Thus, the SPI/Master 11 does not perform the SPI communication of the next frame unless the SPI/Master 11 receives the interrupt signal M INT. Hence, the SPI/Master 11 cannot perform the SPI communication at high speed.

Accordingly, the SPI/Master 11 according to a third embodiment is enabled to perform the SPI communication of multiple consecutive frames even when the SPI/Master 11 does not receive the interrupt signal M_INT. An increase in speed of the SPI communication is thereby achieved.

A communication system 2 according to the third embodiment has a block configuration similar to that of FIG. 1, but is different from the communication systems 2 according to the first and second embodiments described above in that an SPI packet generated by the M_SerDes 31 includes a packet ID identifying the SPI packet and in that the SPI/Master 11 performs the SPI communication of a next frame without waiting to receive the interrupt signal M_INT from the M_SerDes 31.

The M_SerDes 31 makes a timing in which SPI data received from the S_SerDes 41 is read from the buffer/memory 31-1-2 via the M_MISO pin coincide with a timing in which the M_SerDes 31 transmits SPI data from the M_MOSI pin to the S_SerDes 41.

In addition, the SPI/Master 11 grasps, in advance, a turnaround time taken for SPI communication, the turnaround time being a parameter specific to the present system. Here, the turnaround time is a time from the transmission of SPI data by the SPI/Master 11 to the reception of SPI data from the SPI/Slave 12 in response to the SPI data.

The SPI/Master 11 determines that SPI data received from the SPI/Slave 12 before the passage of the turnaround time is invalid, and the SPI/Master 11 discards the SPI data.

In addition, in order to clearly indicate to which packet transmitted by the M SerDes 31 the SPI data received from the S SerDes 41 corresponds, the ECP 31-2 within the M SerDes 31 adds a packet ID identifying each transmission packet to the corresponding transmission packet when generating the transmission packet.

FIG. 11 is a diagram of assistance in explaining information included in a transmission packet generated by the ECP 31-2 according to the third embodiment. In FIG. 11, C-12 is newly added to the information of FIG. 5. The ECP 31-2 within the M SerDes 31 adds a packet ID to each transmission packet. In a case where the S_SerDes 41 returns a transmission packet corresponding to the transmission packet from the M_SerDes 31, the S_SerDes 41 adds the same packet ID as the packet ID added to the transmission packet from the M_SerDes 31.

The packet ID may be a cyclic numerical value. For example, as the packet ID, a numerical value of 0 to 1023 may be changed in order, and when 1023 is reached, the numerical value may be next changed from 0 in order. The ECP 31-2 adds the packet ID of the transmission packet to the header of the transmission packet, as illustrated in FIG. 11.

FIG. 12 is a timing chart in which the SPI/Master 11 performs communication with the SPI/Slave 12 in the third embodiment. FIG. 13A and FIG. 13B include a flowchart illustrating a processing procedure of the communication system 2 according to the third embodiment. FIG. 13A and FIG. 13B illustrate a processing procedure in a case where one set of SPI data is transmitted from the SPI/Master 11 to the SPI/Slave 12 within one frame period. In the following, the processing operation of the communication system 2 according to the third embodiment will be described with reference to FIG. 12, FIG. 13A, and FIG. 13B.

First, the SPI/Master 11 performs processing of generating the SPI control information to be used by the ECP 31-2 and the DCP 31-3 within the M SerDes 31, and transmitting the SPI control information to the M SerDes 31 (steps S1 to S4, times t1 to t4). The SPI control information, for example, includes an SPI transmission mode, SCK frequency information, an SPI mode, and the size and number of data blocks DB at a time of SPI communication. The SPI/Master 11 stores the SPI control information in the buffer/memory 11-2 in advance.

The controller 11-3 within the SPI/Master 11 sets M CSn(0) in an active state (Low) (asserts M_CSn(0)) in order to perform SPI communication with the M_SerDes 31 (step S71, time t71).

The controller 11-3 within the SPI/Master 11 makes a clock M_SCK output by controlling the SCK generator 11-4 (step S72, time t72). The SPI control information stored in the buffer/memory 11-2 is sequentially read out and transferred to the shift register 11-1 in synchronism with the clock M SCK. The transferred SPI control information includes the transmission mode, the SCK frequency information, the SPI mode, the transmission data size, the number of data blocks, and the like. The shift register 11-1 sequentially outputs the SPI control information in synchronism with the clock M_SCK (steps S72 to S73, times t72 to t73). This SPI control information is input to the M SerDes 31 via the M_MOSI pin. The shift register 31-1-1 within the M SerDes 31 captures the SPI control information from the SPI/Master 11 in synchronism with M_SCK.

In parallel with capturing the SPI control information from the SPI/Master 11, the shift register 31-1-1 transmits data held in the shift register 31-1-1 to the SPI/Master 11 via the M_MISO pin in synchronism with M_SCK. This data is invalid data, and is therefore indicated by a broken line from time t72 to t73 in FIG. 6. The SPI/Master 11 discards this data after receiving the data.

When the data transfer of the SPI/Master 11 is completed, the controller 11-3 within the SPI/Master 11 makes the SCK generator 11-4 stop generating M_SCK, and deasserts M_CSn(0) to an idle state (step S74, time t74). When M_SCK is stopped, the shift register 31-1-1 within the M SerDes 31 transfers the SPI control information from the SPI/Master 11 which is held in the shift register 31-1-1, to the buffer/memory 31-1-2.

The buffer/memory 31-1-2 within the M SerDes 31 transfers the SPI control information from the SPI/Master 11 to the ECP 31-2. The ECP 31-2 converts the SPI control information into an SPI packet.

Next, the SPI/Master 11 transmits SPI data to the M SerDes 31 for a purpose of performing data transmission to the SPI/Slave 12. Specifically, the controller 11-3 within the SPI/Master 11 changes (asserts) M_CSn(1) corresponding to the SPI/Slave 12 from an idle state to an active state (step S75, time t75).

In addition, the controller 11-3 makes the SCK generator 11-4 output M_SCK (step S76, time t76). The buffer/memory 11-2 reads the data to be transmitted to the SPI/Slave 12 by an amount corresponding to the transmission data size, and inputs the data to the shift register 11-1. The shift register 11-1 sequentially transmits the SPI data for the SPI/Slave 12 to the M SerDes 31 via the M_MOSI pin in synchronism with M_SCK (step S77, time t77). The M_SerDes 31 generates a transmission packet including the SPI data from the SPI/Master 11. As described above, a packet ID (for example, when ID = #1) is added to the header of the transmission packet.

In synchronism with the transmission of the SPI data from the shift register via the M_MOSI pin, data from the M SerDes 31 is input to the shift register 11-1 via the M_MISO pin in synchronism with M_SCK. At this point in time, the interrupt signal M_INT is not asserted, and the turnaround time has not passed. Thus, the SPI/Master 11 determines that the data is invalid data, and the SPI/Master 11 discards the data, as described above.

The shift register 31-1-1 within the M SerDes 31 sequentially captures the data output from the SPI/Master 11 into the shift register 31-1-1 in synchronism with SCK. When the data transfer of an amount corresponding to the transmission data size is completed, the controller 11-3 within the SPI/Master 11 makes the SCK generator 11-4 stop outputting M_SCK (step S78, time t78). Thereafter, the controller 11-3 of the SPI/Master 11 sets M CSn(1) to an idle state (deasserts M_CSn(1)). The controller 11-3 then ends the SPI communication (step S79, time t79).

When M_SCK is stopped, the M SerDes 31 transfers the data held in the shift register 31-1-1 to the buffer/memory 31-1-2. The buffer/memory 31-1-2 transfers the data transferred from the shift register 31-1-1 to the ECP 31-2. The ECP 31-2 generates a packet including the SPI control information received by the communication from time t71 to t73, the CS signal (M_CSn(1)) corresponding to the SPI/Slave 12, and Data for the SPI/Slave 12. The ECP 31-2 adds a flag indicating that a packet is valid and a packet ID to the generated packet, and thereby generates a transmission packet.

The ECP 31-2 sets the generated transmission packet as an SPI packet 51 as illustrated in FIG. 8, and transmits the SPI packet 51 to the DLL 31-4. The DLL 31-4 generates an UP Link packet 52 by integrating the SPI packet 51 from the ECP 31-2 with other transmission packets, and outputs the UP Link packet 52 to the PHY layer block 31-5. The PHY layer block 31-5 outputs the UP Link packet 52 received thereby to the cable 103 according to the UP Link output timing of TDD (step S80, time t80).

The S SerDes 41 performs communication with the M SerDes 31 by the TDD method, and performs SPI communication with the SPI/Slave 12. The PHY layer block 41-5 within the S SerDes 41 receives the UP Link Packet from the M SerDes 31 via the cable 103, and outputs the UP Link Packet to the Link layer block (DLL) 41-4.

The Link layer block 41-4 within the S SerDes 41 extracts the SPI packet including the SPI data from the UP Link Packet, and outputs the SPI packet to the packet decoder (DCP) 41-3. The DCP 41-3 detects that the SPI/Slave 12 is an SPI communication target on the basis of the CSn information (C-2) within the SPI packet received by the DCP 41-3. Then, in order to start SPI communication with the SPI/Slave 12, the controller 41-1-4 detects that all of the SPI data is transmitted on the basis of the transmission mode information (C-1) within the SPI packet, and obtains the number of SCK cycles necessary for one time of SPI communication on the basis of the number of pieces of SPI data (C-5) and the size of the SPI data (C-8). The controller 41-1-4 thereafter sets a Slave select signal S_CS in an active state (asserts the Slave select signal S_CS) (step S81, time t81).

Next, the controller 41-1-4 within the S_SerDes 41 obtains the SCK frequency information (C-3) included in the SPI packet, and makes the SCK generator 41-1-3 output S_SCK at the obtained frequency (step S82, time t82). At this time, a phase relation between S_CS and SCK is in accordance with an SPI mode (C-4) within the SPI packet. The S_SerDes 41 is thereby enabled to transfer the SPI data to the SPI/Slave 12. The data to be transferred to the SPI/Slave 12 is the SPI packet (D-1), and is stored in the buffer/memory 41-1-2.

The shift register 41-1-1 within the S SerDes 41 sequentially outputs the SPI data transferred from the buffer/memory 41-1-2 from the S_MOSI pin according to SCK supplied from the SCK generator 41-1-3 (step S83, time t83). In parallel with this, SPI data output from the SPI/Slave 12 to the S_MISO pin is stored in the shift register 41-1-1, and is thereafter transferred to the buffer/memory 41-1-2 at an appropriate time.

The SPI/Slave 12 sequentially captures the SPI data from the S_MOSI pin of the S_SerDes 41 into the shift register 12-1 in synchronism with S_SCK, and sequentially outputs the data held by the shift register 12-1 from the S_MISO pin (step S84, time t84).

After the controller 41-1-4 drives S_SCK for a length corresponding to the set SPI data size (C-8), the controller 41-1-4 stops SCK and returns S_CS to an idle state (deasserts S_CS) in order to end the SPI communication (step S85, time t85). In parallel with this, the SPI/Slave 12 transfers the SPI data from the S_MOSI pin from the shift register 12-1 to the buffer/memory 12-2 at an appropriate time while receiving the SPI data from the S_MOSI pin of the S_SerDes 41. Consequently, the reception of the data from the SPI/Master 11 is completed.

The buffer/memory 41-1-2 transfers the SPI data received from the SPI/Slave 12 to the packet encoder (ECP) 41-2 in order to transmit the SPI data to the SPI/Master 11. The ECP 41-2 adds the SPI control information obtained in the SPI packet by the ECP 41-2 itself to an SPI packet 53 together with the received SPI data. In addition, the ECP 41-2 adds, to the SPI packet, the information of (C-10) in FIG. 5 which indicates the operation state of the SPI/Slave 12, the packet ID of (C-12), and the CRC of (E-1). In a case where the SPI data from the SPI/Slave 12 is in response to the SPI data from the SPI/Master 11, the packet ID is made to be the same ID as the packet ID (= #1) of the transmission packet including the SPI data from the SPI/Master 11. Because of the same packet ID, the M SerDes 31 can grasp that the transmission packet responding to the transmission packet transmitted to the S SerDes 41 is received.

In addition, in a case where the SPI/Slave 12 outputs the interrupt signal (C-9), the ECP 41-2 includes also information regarding the interrupt signal in the SPI packet 53. In this case, the SPI packet 53 does not convey the SPI data from the SPI/Slave 12. A reason for providing the interrupt signal is that, in the SPI protocol, only the SPI/Master 11 controls the CS signals and SCK, and the SPI/Slave 12 cannot actively output data. Thus, the interrupt signal is issued to wait for an instruction from the SPI/Master 11.

The Link layer block (DLL) 41-4 generates a Down Link packet 54 by integrating the SPI packet 53 received from the ECP 41-2 with other transmission packets, and outputs the Down Link packet 54 to the PHY layer block 41-5. The PHY layer block 41-5 outputs the Down Link packet 54 received thereby to the cable 103 according to the Down Link output timing (step S86, time t86).

The PHY layer block 31-5 of the M SerDes 31 receives the Down Link packet including the SPI packet 53 from the SPI/Slave 12, the Down Link packet being output from the S SerDes 41. The PHY layer block 31-5 outputs the Down Link packet to the DLL 31-4. The DLL 31-4 extracts the SPI packet 53 from the Down Link packet 54 received thereby, and outputs the SPI packet 53 to the packet decoder (DCP) 31-3.

The DCP 31-3 within the M SerDes 31 receives, from the S SerDes 41, the transmission packet including I_DB#1 transmitted to the Master 11 at the same time as the reception of SPI data O_DB#1 from the Master 11, and stores I_DB#1 in the buffer/memory 31-1-2. The M SerDes 31 checks the packet ID added to the transmission packet. When the packet ID added to the transmission packet is the same as the packet ID added to the previously generated transmission packet, the M SerDes 31 determines that valid SPI data is returned from the SPI/Slave 12, and the buffer/memory 31-1-2 asserts the interrupt signal M_INT (step S87, time t87). In a case where the turnaround time has passed, the controller 11-3 of the SPI/Master 11 which has received the interrupt signal M_INT determines that valid SPI data from the SPI/Slave 12 is delivered, and the controller 11-3 captures the SPI data input from the M_MISO pin into the shift register 11-1.

After the controller 11-3 of the SPI/Master 11 asserts M CSn(1) (step S88, time t88), the controller 11-3 makes M_SCK (11-10-2) output by controlling the SCK generator 11-4 (step S89, time t19). The shift register 11-1 sequentially captures the data from the M_MISO pin by an amount corresponding to the transmission data size (C-8) set in a Frame #1 in synchronism with SCK. At this time, the buffer/memory 31-1-2 within the M SerDes 31 transfers the data from the SPI/Slave 12 to the shift register 31-1-1 at an appropriate time. The shift register 31-1-1 sequentially outputs the data in synchronism with the SCK generator 11-4, as described earlier. This data is captured from the M_MISO pin (step S90, time t90). In parallel with this, the SPI/Master 11 reads SPI data desired to be transferred to the SPI/Slave 12 next from the buffer/memory 11-2, captures the SPI data into the shift register 11-1, and sequentially outputs the SPI data from the shift register 11-1 and from the M_MOSI pin (step S91, time t91). After the necessary data is read, the buffer/memory 31-1-2 returns the interrupt signal M_INT to an idle state (deasserts the interrupt signal M_INT) (step S92, time t92).

The transfer of the SPI data between the SPI/Master 11 and the SPI/Slave 12 is completed by the operations thus far. The series of operations described above is repeated a number of times of transfer of necessary SPI data (step S93, time t93).

When the SPI/Master 11 reads last SPI data from the SPI/Slave 12, the SPI/Master 11 asserts M_CSn(1) in order to output dummy data (step S94, time t94). This dummy data is invalid data, and does not need to be transferred to the SPI slave. Thus, the dummy data is discarded without being transferred from the shift register 31-1-1 of the M_SerDes 31 to the buffer/memory 31-1-2 (step S95, time t95). The last data from the SPI/Slave 12 is output from the shift register 31-1-1 within the M SerDes 31 through the M_MISO pin, and is captured into the shift register 11-1 within the SPI/Master 11 (step S96, time t96) .

Thus, in the third embodiment, when a transmission packet including SPI data output by the SPI/Master 11 is generated by the M_SerDes 31, a packet ID is added to the header of the transmission packet. Then, receiving the transmission packet, the S SerDes 41 transmits the SPI data included in the transmission packet to the SPI/Slave 12. When the S SerDes 41 generates, in response to this SPI data, a transmission packet including SPI data transmitted from the SPI/Slave 12, the S SerDes 41 identifies to which transmission packet from the M_SerDes 31 the transmission packet corresponds, and the S_SerDes 41 adds the same packet ID as the packet ID added to the identified transmission packet from the M SerDes 31. Thus, when the M_SerDes 31 that has received this transmission packet confirms that the packet ID is the same, the M SerDes 31 determines that the SPI data is valid SPI data, and asserts the interrupt signal M_INT. The SPI/Master 11 determines that the SPI data is valid SPI data when the turnaround time has passed and the interrupt signal M_INT is asserted. In addition, when the turnaround time has passed, the SPI/Master 11 may read the SPI signal from the M_SerDes 31 even when the interrupt signal M_INT is not asserted.

According to the third embodiment, the packet ID can associate the transmitted transmission packet and the received transmission packet with each other. The SPI/Master 11 can therefore transmit multiple pieces of SPI data to the M SerDes 31 consecutively even when the interrupt signal M_INT is not asserted. Consequently, transmission efficiency can be improved. The SPI/Master 11 grasps the turnaround time from the transmission of SPI data in advance. The SPI/Master 11 can therefore quickly determine that SPI data received while the turnaround time has not passed is invalid data.

### (Fourth Embodiment)

A fourth embodiment is one modification of the third embodiment. In the fourth embodiment, the processing of transmitting divided data within one frame period is repeated over multiple frames. The SPI/Master 11 according to the fourth embodiment is characterized by being able to perform the SPI communication of multiple pieces of divided data even when the SPI/Master 11 does not receive the interrupt signal M INT.

A communication system 2 according to the fourth embodiment has a block configuration similar to that of FIG. 1, but is different from the communication systems 2 according to the first and second embodiments described above in that an SPI packet generated by the M_SerDes 31 includes a packet ID identifying the SPI packet and in that the SPI/Master 11 performs the SPI communication of a next frame without waiting to receive the interrupt signal M_INT from the M_SerDes 31.

FIG. 14 is a timing chart in which the SPI/Master 11 performs communication with the SPI/Slave 12 in the fourth embodiment. FIG. 15A and FIG. 15B include a flowchart illustrating a processing procedure of the communication system 2 according to the fourth embodiment. FIG. 15A and FIG. 15B illustrate a processing procedure in a case where divided data is transmitted within one frame period.

Steps S101 to S104 (times t101 to t104) in FIG. 15A are similar to steps S71 to S74 (times t71 to t74) in FIG. 13A. The SPI/Master 11 generates the SPI control information, and sets the SPI control information in the ECP 31-2 and the DCP 31-3 within the M SerDes 31. Processing operations in step S105 and the subsequent steps are basically similar to those of FIG. 13A and FIG. 13B. However, in the present embodiment, data transmitted within one SPI frame is divided into multiple pieces of data, and each of the multiple pieces of divided data is transmitted in one frame period of TDD. A signal transmitted in one frame period of TDD is referred to as a TDD burst signal.

The SPI/Master 11 asserts the CS signal (M_CSn(1)) in order to start the transmission of SPI data (step S105, time t105). M_CSn(1) continues being asserted until the transmission of all of the divided data is completed.

The SPI/Master 11 makes the SCK generator 11-4 output M_SCK for a purpose of transmitting each piece of divided data (data block DB) (step S106, time t106). M_SCK is output in a fixed cycle until all of the divided data is transmitted. The SPI/Master 11 outputs first divided data O_DB#1 from the shift register 11-1 in synchronism with M_SCK. This divided data O_DB#1 is input to the M_SerDes 31 via the M_MOSI pin, and a transmission packet is generated in the M_SerDes 31. A packet ID (= #1) is added to this transmission packet.

In synchronism with the output of the divided data O_DB#1 from the shift register 11-1 to the M MOSI pin, data from the M_SerDes 31 is input from the M_MISO pin to the shift register 11-1. At point in time, the turnaround time has not passed. The SPI/Master 11 therefore determines that this data is invalid data, and discards the data (step S107, time t107).

While the interrupt signal M_INT is not asserted, the SPI/Master 11 sequentially transmits divided data O_DB#2 and O_DB#3 to the M_SerDes 31 in a fixed cycle in synchronism with M_SCK. These pieces of divided data are sequentially stored in the buffer/memory 31-1-2 within the M_SerDes 31.

The M_SerDes 31 transmits the transmission packet to the S_SerDes 41 in the UP Link output timing (step S108, time t108). The S_SerDes 41 obtains the SPI data and the packet ID included in the transmission packet, and stores the SPI data and the packet ID in the buffer/memory 41-1-2. The S SerDes 41 asserts the Slave Select signal S_CS for selecting the SPI/Slave 12 (step S109, time t109), and outputs S_SCK for transmitting the SPI data (step S110, time t110).

In synchronism with SCK, the S SerDes 41 transmits, from the S_MOSI pin to the SPI/Slave 12, the SPI data O_DB#1 transferred from the buffer/memory 41-1-2 to the shift register 41-1-1 (step Sill, time till).

In addition, the shift register 41-1-1 captures SPI data output from the SPI/Slave 12 from the S_MISO pin (step S112, time t112). The S_SerDes 41 generates a transmission packet I_DB#1 including the SPI data from the SPI/Slave 12, and adds the same packet ID as the packet ID of the immediately preceding transmission packet received from the M_SerDes 31 to the header of the transmission packet I_DB#1. The S_SerDes 41 transmits the transmission packet to the M_SerDes 31 in the Down Link output timing (step S113, time t113).

When the M_SerDes 31 receives the transmission packet from the S_SerDes 41, the M_SerDes 31 stores, in the buffer/memory 31-1-2, the SPI data included in the transmission packet. In addition, the M_SerDes 31 confirms that the packet ID of the header of the transmission packet matches the packet ID of the immediately preceding transmission packet transmitted to the S SerDes 41. When the matching of the packet ID is confirmed, the M SerDes 31 asserts the interrupt signal M_INT for the SPI/Master 11 (step S114, time t114) .

When the turnaround time has passed, and the interrupt signal M_INT is asserted, the SPI/Master 11 determines that the SPI data is valid. The shift register within the SPI/Master 11 captures the SPI data I_DB#1 via the M_MISO pin, and transmits next divided data O_DB#4 from the M_MOSI pin to the M SerDes 31 (step S115, time t115) . Incidentally, the SPI/Master 11 transmits the next divided data in a fixed cycle even when the M_SerDes 31 does not assert the interrupt signal M_INT.

A similar operation is thereafter repeated. The SPI/Master 11 transmits last divided data O_DB#5 to the M SerDes 31, and receives SPI data I_DB#2 from the SPI/Slave 12 (step S116, time t116). At this point in time, SPI data from the SPI/Slave 12 in response to all of the divided data transmitted by the SPI/Master 11 is not delivered. Therefore, the SPI/Master 11 transmits dummy data until all of the SPI data from the SPI/Slave 12 is delivered (steps S117 to S119, times t117 to t119). At time t119, the SPI/Master 11 receives last SPI data from the SPI/Slave 12. Thereafter, at time t120, the SPI/Master 11 deasserts M_CSn(1) (step S120).

Thus, in the fourth embodiment, when multiple pieces of divided data transmitted to the M SerDes 31 by the SPI/Master 11 through SPI communication are transmitted to the S_SerDes 41 in multiple frame periods of the TDD method, the SPI/Master 11 can consecutively transmit the multiple pieces of divided data even when the interrupt signal M_INT from the M_SerDes 31 is not asserted. Consequently, the efficiency of transmission of the SPI data can be improved. In addition, when the M SerDes 31 transmits transmission packets including respective pieces of divided data to the S SerDes 41, the M_SerDes 31 adds a packet ID to the header of a transmission packet. When the S_SerDes 41 that has received this transmission packet generates a transmission packet including SPI data from the SPI/Slave 12, the S_SerDes 41 identifies to which transmission packet from the M_SerDes 31 the transmission packet corresponds, and adds the same packet ID as the packet ID added to the identified transmission packet from the M SerDes 31. Thus, the M_SerDes 31 that has received this transmission packet can confirm the correspondence relation between the transmitted transmission packet and the received transmission packet on the basis of the packet ID. Hence, the M_SerDes 31 can assert the interrupt signal M_INT after confirming whether or not the SPI data included in the received transmission packet is valid. In addition, when the turnaround time has passed, and the interrupt signal M_INT is asserted, the SPI/Master 11 can determine that the SPI data is valid. In addition, when the turnaround time has passed, the SPI/Master 11 may read the SPI signal from the M_SerDes 31 even when the interrupt signal M_INT is not asserted.

### (Fifth Embodiment)

In a fifth embodiment, the SPI/Master 11 performs serial communication with multiple SPI/Slaves 12.

FIG. 16 is a block diagram of principal parts of a communication system 2 including a communication apparatus according to the fifth embodiment. FIG. 16 illustrates a S SerDes 41 and multiple SPI/Slaves 12. The internal configurations of the SPI/Slaves 12 and an M SerDes 31 are similar to those of FIG. 1, and are therefore omitted in FIG. 16. In addition, in FIG. 16, constituent parts common to FIG. 1 and FIG. 16 are identified by the same reference numerals.

The SPI/Master 11 specifies the CSn signal of an SPI/Slave 12 with which the SPI/Master 11 desires to perform communication in the SPI control information transmitted to the M SerDes 31. The controller 41-1-4 within the S_SerDes 41 sets the CSn signal specified by the SPI/Master 11 in an active state. FIG. 16 illustrates an example in which two SPI/Slaves, that is, an SPI/Slave 12_1 and an SPI/Slave 12_2 are connected to the S_SerDes 41.

In a case where the SPI/Master 11 desires to perform data communication with the SPI/Slave 12_1, the SPI/Master 11 sets the CSn signal in the SPI control signal to CS1. Accordingly, the controller 41-1-4 within the S_SerDes 41 sets, in an active state, an S_CS1 pin that outputs the CS1 signal. The CS1 signal from the S_CS1 pin is input to the SPI/Slave 12 1. Thus, the SPI/Slave 12_1 receives SPI data in synchronism with S_SCK from the S SerDes 41, and transmits SPI data to the S_SerDes 41 in synchronism with S_SCK.

In addition, in a case where the SPI/Master 11 desires to perform data communication with the SPI/Slave 12_2, the SPI/Master 11 sets the CSn signal in the SPI control signal to CS2. Accordingly, the controller 41-1-4 within the S SerDes 41 sets, in an active state, an S_CS2 pin that outputs a CS2 signal. The CS2 signal from the S_CS2 pin is input to the SPI/Slave 12_2. Thus, the SPI/Slave 12_2 receives SPI data in synchronism with S_SCK from the S SerDes 41, and transmits SPI data to the S_SerDes 41 in synchronism with S_SCK.

In the communication system 2 of FIG. 16, an example is illustrated in which an SPI/Slave 12 with which the SPI/Master 11 desires to communicate is specified by the CSn signal in the SPI control signal. However, multiple SPI/Slaves 12 may be daisy-chained as illustrated in FIG. 17.

FIG. 17 is a block diagram of principal parts of a communication system 2 including a communication apparatus according to one modification of FIG. 16. FIG. 17 illustrates two SPI/Slaves 12 capable of performing serial communication with the SPI/Master 11 simultaneously. However, three or more SPI/Slaves 12 may be enabled to perform serial communication with the SPI/Master 11 simultaneously.

The shift registers 12-1 within the two SPI/Slaves 12_1 and 12_2 in FIG. 17 are daisy-chained. Data output from the MSB of the shift register 12-1 within the SPI/Slave 12_2 in synchronism with SCK is input to the LSB of the shift register 12-1 within the SPI/Slave 12_1, and data output from the MSB of the shift register 12-1 is transmitted to the S_SerDes 41 by SPI communication.

The communication apparatus in FIG. 17 needs to repeat the processing of steps S24 to S26 in FIG. 6 a number of times equal to the number of the SPI/Slaves 12.

Thus, in the fifth embodiment, the SPI/Master 11 specifies each SPI/Slave 12 by the CSn signal within the SPI control information, and can thereby perform serial communication with the multiple SPI/Slaves 12 bidirectionally. In addition, the multiple SPI/Slaves 12 are daisy-chained, and thereby the SPI/Master 11 can perform serial communication with the multiple SPI/Slaves 12 simultaneously.

Note that the present technology can have the following configurations.
(1) A communication apparatus including:
   a communicating unit configured to add identification information identifying a data block to one set of the data block including a serial signal group, the serial signal group being transmitted from a master in synchronism with a clock and complying with SPI (Serial Peripheral Interface), and transmit the one set of the data block to a communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.
(2) The communication apparatus according to (1), including:
   a memory configured to store a first serial signal group transmitted from the master in synchronism with the clock and complying with SPI, and store a second serial signal group transmitted from a slave in synchronism with the clock and complying with SPI;
   a packet encoder configured to convert the first serial signal group stored in the memory into a first packet of the predetermined communication protocol, and add the identification information to the first packet; and
   a packet decoder configured to convert a second packet of the predetermined communication protocol, the second packet being received from the communication partner apparatus, into the second serial signal group.
(3) The communication apparatus according to (2), in which
   the packet encoder selects the identification information from multiple identification information candidates in order.
(4) The communication apparatus according to (2) or (3), in which
   the first packet includes frequency information and polarity information of the clock and phase information of the clock with respect to a data signal of the first serial signal group complying with SPI.
(5) The communication apparatus according to any one of (2) to (4), in which
   the first packet includes information indicating that the one set of the data block is included within the one frame period or information indicating that the multiple data blocks divided according to the multiple frame periods are included.
(6) The communication apparatus according to (5), in which,
   in a case where the multiple data blocks are included, the first packet includes a total number of the multiple data blocks and division position information of the data blocks.
(7) The communication apparatus according to any one of (2) to (6), in which
   the second packet includes at least one of identification information of the second packet, information indicating an operation state of the slave, and interrupt information from the slave.
(8) The communication apparatus according to (7), in which
   the memory transmits an interrupt signal to the master in a case where it is confirmed that data is transmitted from the slave on the basis of the interrupt information from the slave and it is confirmed that the identification information of the first packet and the identification information of the second packet match each other.
(9) The communication apparatus according to (7) or (8), in which
   the packet encoder generates the first packet on the basis of the first serial signal group transmitted from the master irrespective of whether or not the interrupt information from the slave is received.
(10) The communication apparatus according to any one of (2) to (9), in which
   the first packet includes information of a slave select signal that selects the communication partner apparatus or the slave and is included in the first serial signal group complying with SPI.
(11) The communication apparatus according to (10), in which
   the packet encoder transmits the first packet addressed to the communication partner apparatus or the slave selected by the slave select signal.
(12) The communication apparatus according to any one of (2) to (11), including:
   a shift register configured to sequentially store each serial signal included in the first serial signal group in the memory in synchronism with the clock and transmit each serial signal included in the second serial signal group to the master in order in synchronism with the clock.
(13) The communication apparatus according to (12), in which
   the shift register transmits the second serial signal group that is valid to the master in a case where identification information included in the second packet before being converted into the second serial signal group matches the identification information included in the first packet transmitted to the communication partner apparatus before the second packet is received.
(14) The communication apparatus according to any one of (2) to (13), in which
   the communicating unit transmits the first packet in a first timing specified by the predetermined communication protocol and receives the second packet in a second timing specified by the predetermined communication protocol.
(15) The communication apparatus according to (14), in which,
   under the communication protocol according to TDD (Time Division Duplex), the first packet is transmitted and received between the communicating unit and the communication partner apparatus in a first period within each frame period, and the second packet is transmitted and received between the communicating unit and the communication partner apparatus in a second period within each frame period.
(16) A communication apparatus including:
   a communicating unit configured to add identification information identifying a data block to one set of the data block including a serial signal group that is transmitted from a slave in synchronism with a clock generated on the basis of clock frequency information included in a packet from a communication partner apparatus, and complies with SPI and transmit the one set of the data block to the communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.
(17) The communication apparatus according to (16), including:
   a packet decoder configured to convert a first packet of the predetermined communication protocol, the first packet being received from the communication partner apparatus, into a first serial signal group complying with SPI;
   a clock generator configured to generate the clock on the basis of the clock frequency information included in the first serial signal group;
   a memory configured to store the first serial signal group in synchronism with the clock and store a second serial signal group transmitted from the slave in synchronism with the clock and complying with SPI; and
   a packet encoder configured to convert the second serial signal group stored in the memory into a second packet of the predetermined communication protocol and add the identification information to the second packet.
(18) The communication apparatus according to (17), in which,
   in a case where the second packet is transmitted to the communication partner apparatus in response to the first packet received from the communication partner apparatus, the packet encoder adds the same identification information as the identification information included in the first packet to the second packet.
(19) The communication apparatus according to (17) or (18), in which
   the second packet includes information indicating that the one set of the data block transmitted within one frame period of the second serial signal group is included or information indicating that the multiple data blocks divided into the multiple frame periods and transmitted are included.
(20) The communication apparatus according to any one of (17) to (19), in which
   the second packet includes interrupt information that requests a master to read a state of the slave.
(21) The communication apparatus according to any one of (17) to (20), including:
   a shift register configured to store each serial signal included in the second serial signal group in the memory and transmit each serial signal included in the first serial signal group to the slave.
(22) The communication apparatus according to any one of (17) to (20), in which
   the communicating unit transmits the second packet in a first timing specified by the predetermined communication protocol and receives the first packet in a second timing specified by the predetermined communication protocol.
(23) The communication apparatus according to (22), in which,
   under the communication protocol according to TDD (Time Division Duplex), the first packet is transmitted and received between the communicating unit and the communication partner apparatus in a first period within each frame period, and the second packet is transmitted and received between the communicating unit and the communication partner apparatus in a second period within each frame period.
(24) A communication system including:
   a first communication apparatus and a second communication apparatus configured to transmit and receive packets under a predetermined communication protocol,
   the first communication apparatus including a first communicating unit configured to add identification information identifying a data block to one set of the data block including a serial signal group, the serial signal group being transmitted from a master in synchronism with a clock and complying with SPI (Serial Peripheral Interface), and transmit the one set of the data block to the second communication apparatus within one frame period of the predetermined communication protocol, or add identification information identifying each of multiple data blocks to the multiple data blocks each including a part of the serial signal group and transmit the multiple data blocks to the second communication apparatus in multiple frame periods, and
   the second communication apparatus including a second communicating unit configured to add identification information identifying a data block to one set of the data block including a serial signal group that is transmitted from a slave in synchronism with a clock generated on the basis of clock frequency information included in a packet from the first communication apparatus, and complies with SPI, and transmit the one set of the data block to the first communication apparatus within one frame period of the predetermined communication protocol, or add identification information identifying each of multiple data blocks to the multiple data blocks each including a part of the serial signal group and transmit the multiple data blocks to the first communication apparatus in multiple frame periods.
(25) A communication method including:
   adding identification information identifying a data block to one set of the data block including a serial signal group, the serial signal group being transmitted from a master in synchronism with a clock and complying with SPI (Serial Peripheral Interface), and transmitting the one set of the data block to a communication partner apparatus within one frame period of a predetermined communication protocol, or adding identification information identifying each of multiple data blocks to the multiple data blocks each including a part of the serial signal group and transmitting the multiple data blocks to the communication partner apparatus in multiple frame periods.

Aspects of the present disclosure are not limited to the individual embodiments described above, and include also various modifications conceivable by those skilled in the art. Effects of the present disclosure are not limited to the contents described above. That is, various additions, changes, and partial omissions are possible without departing from the conceptual ideas and spirit of the present disclosure derived from contents defined in claims and equivalents thereof.

### [Reference Signs List]

1a: Communication apparatus
1b: Communication apparatus
2: Communication system
11: SPI/Master
11-1: Sequential shift register
11-1: Shift register
11-2: Buffer/memory
11-3: Controller
11-4: SCK generator
12: SPI/Slave
12-1: Shift register
12-2: Buffer/memory
31: M_SerDes
31-1: SPI block
31-1-1: Shift register
31-1-2: Buffer/memory
31-3: Packet decoder (DCP)
31-5: PHY layer block
32: Peripheral device
41: S_SerDes
41-1: SPI block
41-1-1: Shift register
41-1-2: Buffer/memory
41-1-3: SCK generator
41-1-4: Controller
41-2: Packet encoder (ECP)
41-3: Packet decoder (DCP)
41-4: Link layer block (DLL)
41-5: PHY layer block
42: Peripheral device
103: Cable

## Claims

1. A communication apparatus comprising:
a communicating unit configured to add identification information identifying a data block to one set of the data block including a serial signal group, the serial signal group being transmitted from a master in synchronism with a clock and complying with SPI (Serial Peripheral Interface), and transmit the one set of the data block to a communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.

2. The communication apparatus according to claim 1, comprising:
a memory configured to store a first serial signal group transmitted from the master in synchronism with the clock and complying with SPI, and store a second serial signal group transmitted from a slave in synchronism with the clock and complying with SPI;
a packet encoder configured to convert the first serial signal group stored in the memory into a first packet of the predetermined communication protocol, and add the identification information to the first packet; and
a packet decoder configured to convert a second packet of the predetermined communication protocol, the second packet being received from the communication partner apparatus, into the second serial signal group.

3. The communication apparatus according to claim 2, wherein
the packet encoder selects the identification information from multiple identification information candidates in order.

4. The communication apparatus according to claim 2, wherein
the first packet includes frequency information and polarity information of the clock and phase information of the clock with respect to a data signal of the first serial signal group complying with the SPI.

5. The communication apparatus according to claim 2, wherein
the first packet includes information indicating that the one set of the data block is included within the one frame period or information indicating that the multiple data blocks divided according to the multiple frame periods are included.

6. The communication apparatus according to claim 5, wherein,
in a case where the multiple data blocks are included, the first packet includes a total number of the multiple data blocks and division position information of the data blocks.

7. The communication apparatus according to claim 2, wherein
the second packet includes at least one of identification information of the second packet, information indicating an operation state of the slave, and interrupt information from the slave.

8. The communication apparatus according to claim 7, wherein
the memory transmits an interrupt signal to the master in a case where it is confirmed that data is transmitted from the slave on a basis of the interrupt information from the slave and it is confirmed that the identification information of the first packet and the identification information of the second packet match each other.

9. The communication apparatus according to claim 7, wherein
the packet encoder generates the first packet on a basis of the first serial signal group transmitted from the master irrespective of whether or not the interrupt information from the slave is received.

10. The communication apparatus according to claim 2, wherein
the first packet includes information of a slave select signal that selects the communication partner apparatus or the slave and is included in the first serial signal group complying with the SPI.

11. The communication apparatus according to claim 10, wherein
the packet encoder transmits the first packet addressed to the communication partner apparatus or the slave selected by the slave select signal.

12. The communication apparatus according to claim 2, comprising:
a shift register configured to sequentially store each serial signal included in the first serial signal group in the memory in synchronism with the clock and transmit each serial signal included in the second serial signal group to the master in order in synchronism with the clock.

13. The communication apparatus according to claim 12, wherein
the shift register transmits the second serial signal group that is valid to the master in a case where identification information included in the second packet before being converted into the second serial signal group matches the identification information included in the first packet transmitted to the communication partner apparatus before the second packet is received.

14. The communication apparatus according to claim 2, wherein
the communicating unit transmits the first packet in a first timing specified by the predetermined communication protocol and receives the second packet in a second timing specified by the predetermined communication protocol.

15. The communication apparatus according to claim 14, wherein,
under the communication protocol according to TDD (Time Division Duplex), the first packet is transmitted and received between the communicating unit and the communication partner apparatus in a first period within each frame period, and the second packet is transmitted and received between the communicating unit and the communication partner apparatus in a second period within each frame period.

16. A communication apparatus comprising:
a communicating unit configured to add identification information identifying a data block to one set of the data block including a serial signal group that is transmitted from a slave in synchronism with a clock generated on a basis of clock frequency information included in a packet from a communication partner apparatus, and complies with SPI and transmit the one set of the data block to the communication partner apparatus within one frame period of a predetermined communication protocol, or add identification information identifying each of multiple data blocks to the multiple data blocks each including a part of the serial signal group and transmit the multiple data blocks to the communication partner apparatus in multiple frame periods.

17. The communication apparatus according to claim 16, comprising:
a packet decoder configured to convert a first packet of the predetermined communication protocol, the first packet being received from the communication partner apparatus, into a first serial signal group complying with SPI;
a clock generator configured to generate the clock on a basis of the clock frequency information included in the first serial signal group;
a memory configured to store the first serial signal group in synchronism with the clock and store a second serial signal group transmitted from the slave in synchronism with the clock and complying with SPI; and
a packet encoder configured to convert the second serial signal group stored in the memory into a second packet of the predetermined communication protocol and add the identification information to the second packet.

18. The communication apparatus according to claim 17, wherein,
in a case where the second packet is transmitted to the communication partner apparatus in response to the first packet received from the communication partner apparatus, the packet encoder adds same identification information as the identification information included in the first packet to the second packet.

19. The communication apparatus according to claim 17, wherein
the second packet includes information indicating that the one set of the data block transmitted within one frame period of the second serial signal group is included or information indicating that the multiple data blocks divided into the multiple frame periods and transmitted are included.

20. The communication apparatus according to claim 17, wherein
the second packet includes interrupt information that requests a master to read a state of the slave.

21. The communication apparatus according to claim 17, comprising:
a shift register configured to store each serial signal included in the second serial signal group in the memory and transmit each serial signal included in the first serial signal group to the slave.

22. The communication apparatus according to claim 17, wherein
the communicating unit transmits the second packet in a first timing specified by the predetermined communication protocol and receives the first packet in a second timing specified by the predetermined communication protocol.

23. The communication apparatus according to claim 22, wherein,
under the communication protocol according to TDD (Time Division Duplex), the first packet is transmitted and received between the communicating unit and the communication partner apparatus in a first period within each frame period, and the second packet is transmitted and received between the communicating unit and the communication partner apparatus in a second period within each frame period.

24. A communication system comprising:
a first communication apparatus and a second communication apparatus configured to transmit and receive packets under a predetermined communication protocol,
the first communication apparatus including a first communicating unit configured to add identification information identifying a data block to one set of the data block including a serial signal group, the serial signal group being transmitted from a master in synchronism with a clock and complying with SPI (Serial Peripheral Interface), and transmit the one set of the data block to the second communication apparatus within one frame period of the predetermined communication protocol, or add identification information identifying each of multiple data blocks to the multiple data blocks each including a part of the serial signal group and transmit the multiple data blocks to the second communication apparatus in multiple frame periods, and
the second communication apparatus including a second communicating unit configured to add identification information identifying a data block to one set of the data block including a serial signal group that is transmitted from a slave in synchronism with a clock generated on a basis of clock frequency information included in a packet from the first communication apparatus, and complies with SPI, and transmit the one set of the data block to the first communication apparatus within one frame period of the predetermined communication protocol, or add identification information identifying each of multiple data blocks to the multiple data blocks each including a part of the serial signal group and transmit the multiple data blocks to the first communication apparatus in multiple frame periods.

25. A communication method comprising:
adding identification information identifying a data block to one set of the data block including a serial signal group, the serial signal group being transmitted from a master in synchronism with a clock and complying with SPI (Serial Peripheral Interface), and transmitting the one set of the data block to a communication partner apparatus within one frame period of a predetermined communication protocol, or adding identification information identifying each of multiple data blocks to the multiple data blocks each including a part of the serial signal group and transmitting the multiple data blocks to the communication partner apparatus in multiple frame periods.
